(19) Europäisches Patentamt European Patent Office Office européen des brevets

(11) **EP 4 734 508 A1**

(12) **EUROPEAN PATENT APPLICATION**

(43) Date of publication:
**29.04.2026 Bulletin 2026/18**

(21) Application number: **24306780.8**

(22) Date of filing: **23.10.2024**

(51) International Patent Classification (IPC):
***H04N 19/117*** (2014.01)    ***H04N 19/85*** (2014.01)
***H04N 19/70*** (2014.01)

(52) Cooperative Patent Classification (CPC):
**H04N 19/117; H04N 19/70; H04N 19/85**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS 75017 Paris (FR)**

(72) Inventors:
• **DEMARTY, Claire-Helene 35520 MONTREUIL LE GAST (FR)**

• **BLONDE, Laurent 35235 THORIGNE-FOUILLARD (FR)**
• **AUMONT, Franck 35770 VERN SUR SEICHE (FR)**
• **LE MEUR, Olivier 35160 TALENSAC (FR)**
• **REINHARD, Erik 35630 HEDE-BAZOUGES (FR)**

(74) Representative: **Vossius & Partner Patentanwälte Rechtsanwälte mbB Siebertstraße 3 81675 München (DE)**

(54) **ENERGY INFORMATION FOR NEURAL NETWORK POST FILTER**

(57)    Systems, methods, and instrumentalities are disclosed for energy saving in video coding. A supplemental enhancement information (SEI) message may include a first syntax element that indicates whether energy information related to a neural network post-processing filter (NNPF) is present in the SEI message. The SEI message may further include a second syntax element that indicates whether information related to a complexity or a property of the NNPF is present in the SEI message. The video data may be encoded or decoded based on the SEI message.

**FIG. 8H**

**Description**

**BACKGROUND**

The present application is related to video coding systems that may be used to compress digital video signals, e.g., to reduce the storage and/or transmission bandwidth needed for such signals. Video coding systems may include, for example, block-based, wavelet-based, and/or object-based systems.

**BRIEF SUMMARY**

Systems, methods, and instrumentalities are disclosed for energy saving related to video coding. According to embodiments of the disclosure, a video encoding device may be configured to obtain video data, and generate a supplemental enhancement information (SEI) message, wherein the SEI message may comprise a first syntax element that indicates whether energy information related to a neural network post-processing filter (NNPF) may be present in the SEI message. Such energy information may include, for example, energy that may be used to apply the NNPF, or energy cost or saving that may incur as a consequence of using the NNPF (e.g., a total energy balance resulting from the application or use of the NNPF). The SEI message may further include a second syntax element that indicates whether information related to a complexity or a property of the NNPF is present in the SEI message. The video encoding device may encode video data and generate a bitstream that may comprise the encoded video data and the SEI message. The video encoding device may then provide the bitstream, for example, to a video decoding device.

According to embodiments of the disclosure, a video decoding device may be configured to obtain a bitstream comprising video data and an SEI message. The SEI message may include a first syntax element that indicates whether energy information related to a neural network post-processing filter (NNPF) may be present in the SEI message. Such energy information may include, for example, energy that may be used to apply the NNPF, or energy cost or saving that may incur as a consequence of using the NNPF (e.g., a total energy balance resulting from the application or use of the NNPF). The SEI message may further include a second syntax element that indicates whether information related to a complexity or a property of the NNPF is present in the SEI message. The video decoding device may decode the video data, and determine whether to apply the NNPF to the decoded video data based at least on the SEI message.

**BRIEF DESCRIPTION OF THE DRAWINGS**

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.

FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 shows an example of a context in which embodiments of the present disclosure may be implemented.
FIG. 5 shows an example of partitioning undergone by an image of an original video sequence.
FIG. 6 shows an example of video coding system according to embodiments of the present disclosure.
FIG. 7 shows an example process for encoding a bitstream comprising information indicative of energy characteristics of the neural network post-processing filter according to embodiments.
FIG. 8A shows an example process for decoding a bitstream comprising an NNPFC SEI message carrying information indicative of energy characteristics of the neural network post-processing filter according to embodiments.
FIG. 8B shows another example process for decoding a bitstream comprising an NNPFC SEI message carrying information indicative of energy characteristics of the neural network post-processing filter according to embodiments.
FIG. 8C shows another example process for decoding a bitstream comprising an NNPFC SEI message carrying information indicative of energy characteristics of the neural network post-processing filter according to embodiments.
FIG. 8D shows another example process for decoding a bitstream comprising an NNPFC SEI message carrying information indicative of energy characteristics of the neural network post-processing filter according to embodiments.
FIG. 8E shows another example process for decoding a bitstream comprising an NNPFC SEI message carrying information indicative of energy characteristics of the neural network post-processing filter according to embodiments.

FIG. 8F shows another example process for decoding a bitstream comprising an NNPFC SEI message carrying information indicative of energy characteristics of the neural network post-processing filter according to embodiments.

FIG. 8G shows another example process for decoding a bitstream comprising an NNPFC SEI message carrying information indicative of energy characteristics of the neural network post-processing filter according to embodiments.

FIG. 8H shows another example process for decoding a bitstream comprising an NNPFC SEI message carrying information indicative of energy characteristics of the neural network post-processing filter according to embodiments.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

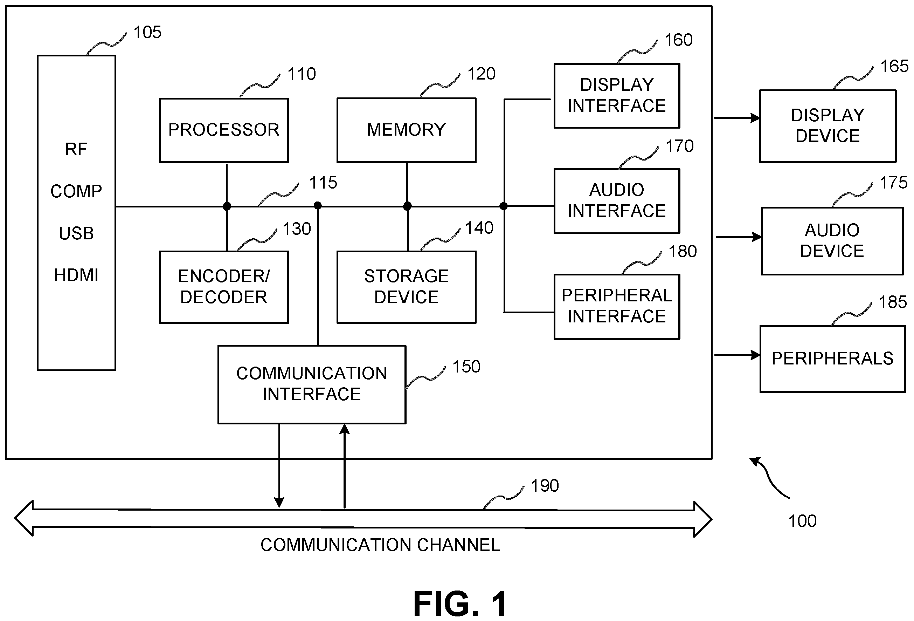

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

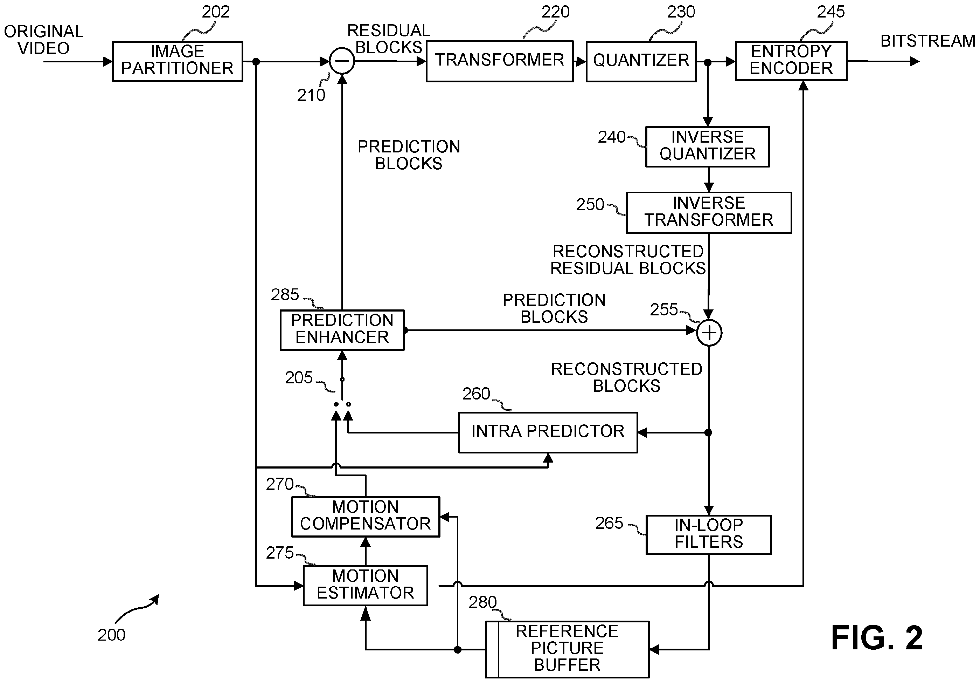

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

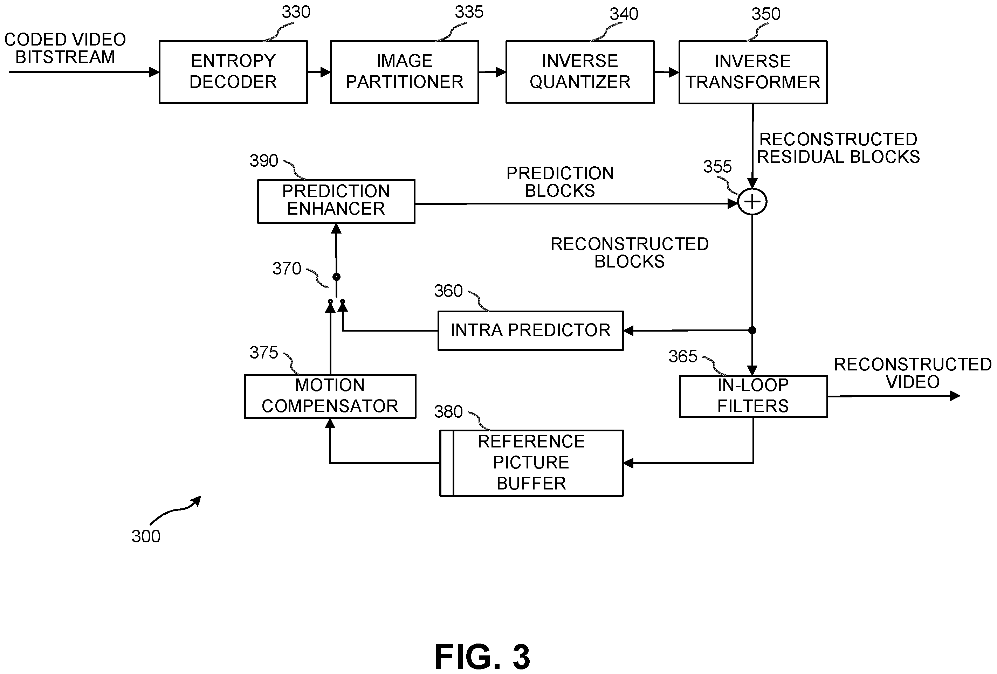

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C, *Cb, Cr)*.

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Various embodiments relate to specific syntax elements that define energy information related to a neural network post-processing filter used in a video coding system. An encoded video bitstream carries such syntax elements from an encoding device to a decoding device, thus allowing the encoding device to specify energy information related to a neural network post-processing filter and allowing the decoding device to make decision with regards to the application of the neural network post-processing filter based on the energy information.

The present aspects, although describing principles in the context of VVC (Versatile Video Coding) or HEVC (High Efficiency Video Coding) specifications, are not limited to these video coding standards, and can be applied, for example, to other standards and recommendations and extensions of any such standards and recommendations (including VVC and HEVC). Unless indicated otherwise, or technically precluded, the aspects described in this application can be used individually or in combination.

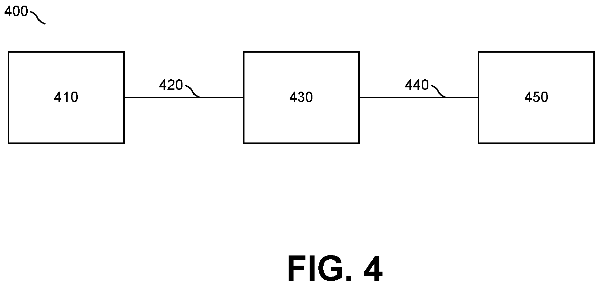

FIG. 4 illustrates an example of a context in which the following embodiments can be implemented. In this context 400, a system 410 may transmit a video stream to a system 430 using a communication channel 420. Examples of system 410 may comprise a camera, a storage device, a computer, a drone, a video surveillance camera, a server or any device capable of delivering a video stream. The video stream may be either encoded and transmitted by the system 410 or received and/or stored by the system 410 and then transmitted. The communication channel 420 may be a wired (for example Internet, Ethernet, Cable network) or a wireless (for example WiFi, 3G, 4G or 5G, satellite TV, terrestrial TV) network link. The system 430 may receive and decode the video stream to generate a sequence of decoded pictures. An example of system 430 may be a set top box. The obtained sequence of decoded pictures is then transmitted to a display system 450 using a communication channel 440, that could be a wired or wireless network as introduced above. The display system 450 may then display said pictures. An example of display system 450 may be a television or display monitor.

In an embodiment, the system 430 and the display system 450 may be comprised in a single device, thus combining the reception, decoding and display of the video stream. Examples of such device are a television, a computer, a tablet, a smartphone, a head-mounted display, a vehicle entertainment system, a medical device.

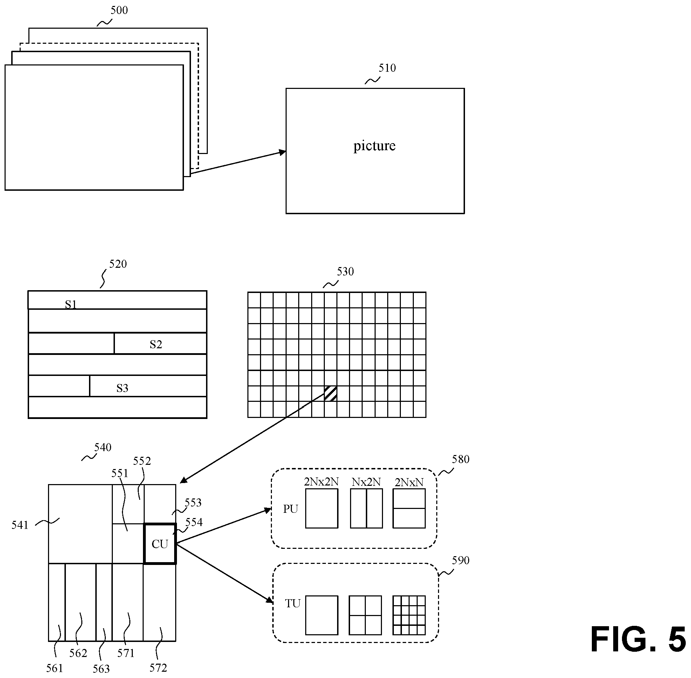

FIG. 5 illustrates an example of partitioning undergone by an image of an original video sequence. An original video sequence 500 may comprise a plurality of pictures 510. A picture may comprise a plurality of pixels, generally arranged in a grid comprising rows and columns. It is considered in this document that a pixel may include three components: a luminance component and two chrominance components. Other types of pixels may, however, possibly comprise less or more components such as only a luminance component or an additional depth component or an additional transparency component.

A picture is divided into a plurality of coding entities. First, as represented by reference 530, a picture is divided in a grid of blocks called coding tree units (CTU). A CTU consists of a block of luminance samples together with two corresponding blocks of chrominance samples. The size of such block is generally N×N, and N is generally a power of two having a maximum value of "128" for example. Second, a picture is divided into one or more groups of CTU. For example, it can be divided into one or more tile rows and tile columns, a tile being a sequence of CTU covering a rectangular region of a picture. In some cases, a tile could be divided into one or more bricks, each of which consisting of at least one row of CTU within the tile. Above the concept of tiles and bricks, another encoding entity, called slice, exists, that can contain at least one tile of a picture or at least one brick of a tile. In the example represented by reference 520, the picture 510 is divided into three slices S1, S2 and S3 of the raster-scan slice mode, each comprising a plurality of tiles (not represented), each tile comprising only one brick.

As represented by reference 540, a CTU may be partitioned into the form of a hierarchical tree of one or more sub-blocks called coding units (CU). The CTU is the root (i.e., the parent node) of the hierarchical tree and can be partitioned in a plurality of CU (i.e., child nodes). Each CU becomes a leaf of the hierarchical tree if it is not further partitioned in smaller CU or becomes a parent node of smaller CU (i.e., child nodes) if it is further partitioned. During the coding of a picture, the partitioning is adaptive, each CTU being partitioned to Optimize a compression efficiency.

For example, the CTU 540 is first partitioned in four square CU using a quadtree type partitioning. The upper left CU 541 is a leaf of the hierarchical tree since it is not further partitioned, i.e., it is not a parent node of any other CU. The upper right CU is further partitioned in four smaller square CU 551, 552, 553, 554 using again a quadtree type partitioning. The bottom left CU is vertically partitioned in three rectangular CU 561, 562, 563 using a ternary tree type partitioning. The bottom right CU is vertically partitioned in two rectangular CU 571, 572 using a binary tree type partitioning.

HEVC includes the concept of prediction unit (PU) and transform unit (TU). Indeed, in HEVC, the coding entity that is used for prediction (i.e., a PU) and transform (i.e., a TU) can be a subdivision of a CU. For example, as represented in the figure, a CU of size 2N×2N, can be divided in PU 580 of size N×2N or of size 2N×N. In addition, said CU can be divided in four TU 590 of size N×N or in "16" TU of size (N/2)×(N/2). Other video coding standards also use these notions. In VVC, except in some particular cases, frontiers of the TU and PU are aligned on the frontiers of the CU. Consequently, a CU comprises generally one TU and one PU.

In the present application, the terms "reconstructed" and "decoded" may be used interchangeably, the terms "pixel" and "sample" may be used interchangeably, the terms "image," "picture", "sub-picture", "slice" and "frame" may be used interchangeably. Usually, but not necessarily, the term "reconstructed" is used at the encoder side while "decoded" is used at the decoder side. In the present application, the term "block" or "picture block" can be used to refer to any one of a CTU, a CU, a PU and a TU. In addition, the term "block" or "picture block" can be used to refer to a macroblock, a partition and a sub-block as specified in H.264/AVC or in other video coding standards, and more generally to refer to an array of samples of numerous sizes.

Video coding standards like AVC, HEVC and VVC enable embedding of metadata in video bitstreams through Supplemental Enhancement information (SEI) messages. Those messages are defined either in the core standard or companion standard like Versatile Supplemental Enhancement Information (VSEI), and more get added in successive versions of these standards.

A SEI message is a syntax structure that is defined in various MPEG standards to allow carriage of metadata. It is a specific type of Network Access Layer (NAL) unit, which is the elementary packet in MPEG bitstream formats. The SEI syntax may vary slightly across different standards, but it commonly contains at least a payload type, a payload length, and the payload itself. The SEI syntax defined for VVC is illustrated in Table 1 as an example.

Table 1

| sei_message( ) { | Descriptor |
|---|---|
| payloadType = 0 | |
| do { | |
| payload_type_byte | u(8) |
| payloadType += payload_type_byte | |
| } while( payload_type_byte = = 0xFF ) | |
| payloadSize = 0 | |
| do { | |
| payload_size_byte | u(8) |
| payloadSize += payload_size_byte | |
| } while( payload_size_byte = = 0xFF ) | |
| sei_payload( payloadType, payloadSize ) | |
| } | |

In addition, a specific syntax structure is typically defined for each payload type and instantiated by a sei_payload syntax structure according to each payload type. For example, a specific SEI message related to Neural-Network Post-Filter Characteristics (NNPFC-SEI) specifies that a neural network may be used as a post-processing filter. The terms Neural-Network Post-processing Filter (or post filter) is hereafter abbreviated as NNPF. The NNPFC-SEI provides some parameters of such neural network, therefore allowing an encoder to define a neural network for performing a post-processing operation after the decoding operation. The syntax of such NNPFC-SEI message, as disclosed in ISO/IEC DIS 23002-7, is illustrated in Table 2.

Table 2

| nn_post_filter_characteristics( payloadSize ) { | Descriptor |
|---|---|
| nnpfc_purpose | u(16) |
| nnpfc_id | ue(v) |
| nnpfc_base_flag | u(1) |
| nnpfc_mode_idc | ue(v) |
| if( nnpfc_mode_idc = = 1) { | |
| while( !byte_aligned( ) ) | |
| nnpfc_alignment_zero_it_a | u(1) |
| nnpfc_tag_uri | st(v) |
| nnpfc_uri | st(v) |
| } | |
| nnpfc_property_present_flag | u(1) |
| if( nnpfc_property_present_flag ) { | |
| /* input and output formatting */ | |
| nnpfc_num_input_pics_minus1 | ue(v) |
| if( nnpfc_num_input_pics_minus1 > 0) { | |
| for( i = 0; i <= nnpfc_num_input_pics_minus1; i++ ) | |

(continued)

| | |
|---|---|
| nnpfc_input_pic_filtering_flag[ i ] | u(1) |
| nnpfc_absent input_pic zero flag | u(1) |
| } | |
| if( ChromaUpsamplingFlag ) | |
| nnpfc_out_sub_c_flag | u(1) |
| if( ColourizationFlag ) | |
| nnpfc_out_colour_format_idc | u(2) |
| if( ResolutionResamplingFlag ) { | |
| nnpfc_pic_width_num_minus1 | ue(v) |
| nnpfc_pic_width_denom_minus1 | ue(v) |
| nnpfc_pic_height_num_minus1 | ue(v) |
| nnpfc_pic_height_denom_minus1 | ue(v) |
| } | |
| if( PictureRateUpsamplingFlag ) | |
| for( i = 0; i < nnpfc_num_input_pics_minus1; i++) | |
| nnpfc_interpolated_pics[ i ] | ue(v) |
| if( TemporalExtrapolationFlag) | |
| nnpfc extrapolated_pics_minus1 | ue(v) |
| if( SpatialExtrapolationFlag ) { | |
| nnpfc_spatial_extrapolation_left_offset | ue(v) |
| nnpfc_spatial_extrapolation_right_offset | ue(v) |
| nnpfc_spatial_extrapolation_top_offset | ue(v) |
| nnpfc_spatial_extrapolation_bottom_offset | ue(v) |
| } | |
| nnpfc_component_last flag | u(1) |
| nnpfc_inp_format_idc | ue(v) |
| nnpfc_auxiliary_inp_idc | ue(v) |
| nnpfc_inp_order_idc | ue(v) |
| if( nnpfc_inp_format_idc = = 1) { | |
| if( nnpfc_inp order_idc != 1 ) | |
| nnpfc_inp_tensor_luma_bitdepth_minus8 | ue(v) |
| if( nnpfc_inp_order_idc > 0) | |
| nnpfc_inp_tensor_chroma_bitdepth_minus8 | ue(v) |
| } | |
| nnpfc_out_format_idc | ue(v) |
| nnpfc_out_order_idc | ue(v) |
| if( nnpfc_out_format_idc = = 1) { | |
| if( nnpfc_out_order_idc != 1 ) | |
| nnpfc_out_tensor_luma_bitdepth_minus8 | ue(v) |
| if( nnpfc_out_order_idc != 0 ) | |

(continued)

| | |
|---|---|
| nnpfc_out_tensor_chroma_bitdepth_minus8 | ue(v) |
| } | |
| nnpfc_separate_colour_description_present_flag | u(1) |
| if( nnpfc_separate_colour_description_present_flag ) { | |
| nnpfc_colour_primaries | u(8) |
| nnpfc_transfer_characteristics | u(8) |
| if( nnpfc_out_format_idc = = 1) { | |
| nnpfc_matrix_coeffs | u(8) |
| nnpfc_full_range_flag | u(1) |
| } | |
| } | |
| if( nnpfc_out_order_idc > 0) | |
| nnpfc_chroma_loc_info_present_flag | u(1) |
| if( nnpfc_chroma_loc_info_present_flag ) | |
| nnpfc_chroma_sample_loc_type_frame | ue(v) |
| nnpfc_overlap | ue(v) |
| nnpfc_constant_patch_size_flag | u(1) |
| if( nnpfc_constant_patch_size_flag ) { | |
| nnpfc_patch_width_minus1 | ue(v) |
| nnpfc_patch_height_minus1 | ue(v) |
| } else { | |
| nnpfc_extended_patch_width_cd_delta_minus1 | ue(v) |
| nnpfc_extended_patch_height cd delta_minus1 | ue(v) |
| } | |
| nnpfc_padding_type | ue(v) |
| if( nnpfc_padding_type = = 4) { | |
| if( nnpfc_inp_order_idc != 1) | |
| nnpfc_luma_padding_val | ue(v) |
| if( nnpfc_inp_order_idc != 0 ) { | |
| nnpfc_cb_padding_val | ue(v) |
| nnpfc_cr_padding_val | ue(v) |
| } | |
| } | |
| nnpfc_complexity_info_present_flag | u(1) |
| if( nnpfc_complexity_info_present_flag ) { | |
| nnpfc_parameter_type_idc | u(2) |
| if( nnpfc_parameter_type_idc != 2) | |
| nnpfc_log2_parameter_bit_length_minus3 | u(2) |
| nnpfc_num_parameters_idc | u(6) |
| nnpfc_num_kmac_operations_idc | ue(v) |

(continued)

| | |
|---|---|
| nnpfc_total_kilobyte_size | ue(v) |
| } | |
| nnpfc_num_metadata_extension_bits | ue(v) |
| if( nnpfc_num_metadata_extension_bits > 0 ) { | |
| if( nnpfc_purpose = = 0 ) { | |
| nnpfc_application_purpose_tag_uri_present_flag | u(1) |
| if( nnpfc_application_purpose_tag_uri_present_flag ) | |
| nnpfc_application_purpose_tag_uri | st(v) |
| } | |
| if( SpatialExtrapolationFlag ) | |
| nnpfc_scan_type_idc | u(2) |
| nnpfc_reserved_metadata_extension | u(v) |
| } | |
| } | |
| /* ISO/IEC 15938-17 bitstream */ | |
| if( nnpfc_mode_idc = = 0) { | |
| while( !byte_aligned( ) ) | |
| nnpfc_alignment_zero_bit_b | u(1) |
| for( i = 0; more_data_in_payload( ); i++ ) | |
| nnpfc_payload_byte[ i ] | b(8) |
| } | |
| } | |

In this syntax, **nnpfc_mode_idc** provides some information related to the NNPF. A **nnpfc_mode_idc** value equal to 0 indicates that the neural network information is contained in the NNPFC SEI message, and the neural network information is in the format of an ISO/IEC 15938-17 bitstream. A **nnpfc_mode_idc** equal to 1 indicates that the neural network information is identified by the URI indicated by **nnpfc_uri** with the format identified by the tag URI **nnpfc tag_uri.**

In this syntax, some extension of the metadata is possible through the use of the **nnpfc_num_metadata_extension_bits** and the **nnpfc_reserved_metadata extension.** nnpfc_num_metadata_extension_bits equal to 0 specifies that **nnpfc_reserved_metadata_extension** is not present. When nnpfc_num_metadata_extension_bits is greater than 0, let the variable **numSpecifiedMetadataExtensionBits** be the number of bits representing all syntax elements between **nnpfc_num_metadata_extension_bits** and **nnpfc_reserved_metadata extension. nnpfc_num_metadata_extension_bits** greater than 0 specifies the sum of **numSpecifiedMetadataExtensionBits** and the length, in bits, of **nnpfc_reserved_metadata extension.**

The value of **nnpfc_num_metadata_extension_bits** shall be in the range of **numSpecifiedMetadataExtensionBits** to 2 048, inclusive. Values in the range of **numSpecifiedMetadataExtensionBits** + 1 to 2 048, inclusive, for **nnpfc_num_metadata_extension_bits** are reserved for future use by ITU-T | ISO/IEC and shall not be present in bitstreams conforming to this version of this Specification. Decoders conforming to this version of this Specification shall allow any value of **nnpfc_num_metadata_extension_bits** in the range of 0 to **numSpecifiedMetadataExtensionBits** + 1 to 2 048, inclusive.

**nnpfc_reserved_metadata_extension** shall not be present in bitstreams conforming to this version of this Specification. However, decoders conforming to this version of this Specification shall ignore the presence and value of **nnpfc_reserved_metadata extension.** When present, the length, in bits, of **nnpfc_reserved_metadata_extension** is equal to **nnpfc_num_metadata_extension_bits** - **numSpecifiedMetadataExtensionBits.**

A NNPFC-SEI message indicates the intended purpose of the NNPF, specifies the input and output of the neural network and describes its complexity. Up to now, 8 modes have been defined: enhancing visual quality, changing spatial resolution (e.g., up-sampling from high-definition decoded video to ultra-high definition), changing picture rate (e.g., up-sampling from 30 Hz to 60 Hz), up-sampling bit depth to increase the dynamic range of pixel values, colorization to convert monochrome video to full colors, temporal extrapolation or spatial extrapolation. The SEI syntax defined in ISO/IEC DIS 23002-7 allows to define the purpose of a NNPF by using a flag hereafter named nnpfc_purpose as illustrated in Table 3, where (nnpfc_purpose & bitMask) not equal to 0 indicates that the NNPF has the purpose associated with the bitMask value. When nnpfc_purpose is greater than 0 and (nnpfc_purpose & bitMask) is equal to 0, the purpose associated with the bitMask value is not applicable to the NNPF. When nnpfc_purpose is equal to 0x00, the NNPF may be used as determined by the application and as specified by the nnpfc_application_purpose_tag_uri. For instance, if the nnpfc_purpose is equal to 0x0C (0b0001100), it means that we want to activate a resolution resampling NNPF and a picture rate upsampling NNPF.

Table 3

| bitMask | Interpretation |
|---------|----------------|
| 0x01 | General visual quality improvement |
| 0x02 | Chroma upsampling (from the 4:2:0 chroma format to the 4:2:2 or 4:4:4 chroma format, or from the 4:2:2 chroma format to the 4:4:4 chroma format) |
| 0x04 | Resolution resampling (increasing or decreasing the width or height) |
| 0x08 | Picture rate upsampling |
| 0x10 | Bit depth upsampling (increasing the luma bit depth or the chroma bit depth) |
| 0x20 | Colourization |
| 0x40 | Temporal extrapolation (i.e., generating one or more future pictures) |
| 0X80 | Spatial extrapolation (i.e., generating content outside of the spatial area of the input pictures) |

The value of nnpfc_purpose shall be in the range of 0 to 255, inclusive, in bitstreams conforming to this edition of this document. Values of 256 to 65 535, inclusive, for nnpfc_purpose are reserved for future use by ITU-T | ISO/IEC and shall not be present in bitstreams conforming to this edition of this document. Decoders conforming to this edition of this document shall ignore NNPFC SEI messages with nnpfc_purpose in the range of 256 to 65 535, inclusive.

This bitfield is used to derive corresponding variables for the purpose flags shown in table 3. The variables ChromaUpsamplingFlag, ResolutionResamplingFlag, PictureRateUpsamplingFlag, BitDepthUpsamplingFlag, ColourizationFlag, TemporalExtrapolationFlag, and Spatial Extrapolation Flag specifying whether nnpfc_purpose indicates the purpose of the NNPF to include chroma upsampling, resolution resampling, picture rate upsampling, bit depth upsampling, colourization mode, temporal extrapolation, and spatial extrapolation respectively, are derived from the nnpfc_purpose bitfield as follows:

ChromaUpsamplingFlag = ( ( nnpfc_purpose & 0x02 ) > 0) ? 1 : 0
ResolutionResamplingFlag = ( ( nnpfc_purpose & 0x04 ) > 0 ) ? 1 : 0
PictureRateUpsamplingFlag = ( ( nnpfc_purpose & 0x08 ) > 0 ) ? 1 : 0
BitDepthUpsamplingFlag = ( ( nnpfc_purpose & 0x10 ) > 0 ) ? 1 : 0
ColourizationFlag = ( ( nnpfc_purpose & 0x20 ) > 0 ) ? 1 : 0
TemporalExtrapolationFlag = ( ( nnpfc_purpose & 0x40 ) > 0 ) ? 1 : 0
Spatial Extrapolation Flag = ( ( nnpfc_purpose & 0x80 ) > 0 ) ? 1 : 0

The use of a NNPFC-SEI message provides backward compatibility. Indeed, by implementing neural-network filters as a post-processing step and signaling them in a SEI message, their utilization can be introduced to neural network capable devices and services without negatively impacting older systems that lack the ability to execute neural networks.

Embodiments described hereafter have been designed with the foregoing in mind and extend the syntax of NNPFC-SEI messages to include information indicative of energy characteristics of the neural network post-processing filter. The energy characteristics may describe the energy required to run a NNPF or the energy savings (or costs) as a consequence of running a NNPF or the final energy balance induced by the use of the NNPF (thus combining the two first characteristics). Therefore, a system compliant with such messages will be able to make an informed choice on whether a NNPF should be used or not, in other words, the decoder will be able to handle its energy consumption when decoding images.

In the embodiments described herein, it is proposed to use the extension metadata of NNPFC-SEI messages for providing information indicative of energy characteristics of the neural network post-processing filter. Different types of energy related parameters are proposed.

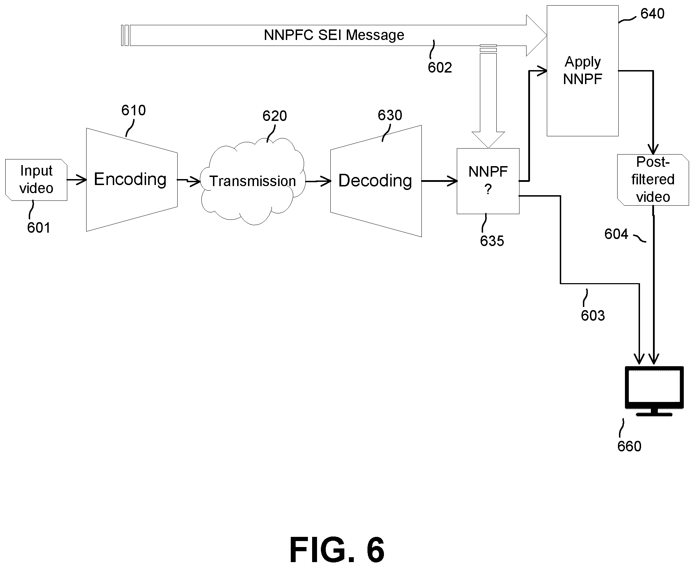

FIG. 6 illustrates a block diagram of an example of video coding system according to embodiments. In step 610, the input video (601) is encoded. An accompanying NNPFC SEI message (602) comprising information indicative of the energy consumption and/or energy saving related to the use of a NNPF, for example according to the syntax described in the tables below, is encoded. In step 620, the encoded video and the NNPFC SEI message are provided to the decoder and conventional video decoding is performed in step 630 to obtain the decoded video (603). The NNPFC SEI message is analyzed. Based on this analysis, the decoder may apply one or more neural network post-processing filter on the decoded video to determine a post-filtered (modified) video (604). Depending on this choice, the video displayed in step 640 is either the decoded (unmodified) video (603) or the post-filtered (modified) video (604).

Applying a neural network needs a certain non-neglectable amount of energy. In some case, it also impacts the energy needed to display the modified video compared to displaying the original decoded video, or the energy needed for subsequent processes (e.g., other post filters). Thanks to the NNPFC SEI message (602) carrying information indicative of energy characteristics of the neural network post-processing filter, the decoder is able to decide whether to apply a neural network post filter at the decoder. This decision, in step 635, is based on the energy that it required to be run and on the potentially saved or consumed energy consequently to the modification applied to the content. The choice of running or not a NNPF may also be done according to criteria related to the device itself. For example, if the decoder is a mobile device and it is considered that not enough energy is available, the application of the neural network does not take place. The information indicative of energy characteristics of a NNPF may also help take decisions between one post filter or another, or one post filter and another processing, based on the energy needed. Local settings of the device or user preferences may also impact this decision. For example, if the user selected his device to be environmentally friendly and to consume as less as possible or less than a predefined threshold, the application of the neural network does not take place, or it can decide to prioritize post filters which consume less. In a more flexible approach, some information based on the energy characteristics of a NNPF may be provided to the user, allowing him/her to be aware of the energy needed by applying some post filtering, and making him/her decide not to apply the NNPF.

These choices may be based not only on the energy that it requires to be run, but also on the energy that can be either saved or lost by using the content on which the post filter has been applied.

Currently, the NNPFC SEI message comprises some information about the complexity of applying a given NNPFC in terms of number of parameters, size of needed memory and number of MAC (multiplication - accumulation operations). However, these numbers, although somehow related to the energy, are not sufficient to give a clear view of the final consumption of running one NNPF or another. Furthermore, they provide an information on what is needed but not a differentiable information on how the energy consumption will subsequently increase while and after running a given neural network post filter.

A first embodiment proposes to add an information indicating the increase of energy amount needed to run a selected neural network post filter. In a second embodiment the saved/lost energy consequently to the application of the post filter is indicated. In a third embodiment, the total energy balance by adding the energy needed to run the post filter and the saved/lost energy consequently to the application of the post filter is indicated. In all three embodiments and their variants, the information indicative of energy characteristics related to the neural network post-processing filter is carried within extension metadata of NNPFC-SEI messages.

Table 4a illustrates the syntax of a NNPFC-SEI message comprising an energy parameter related to a neural network post-processing. This energy parameter is carried within an extension metadata of NNPFC-SEI messages, more particularly it is embedded in a **nnpfc_metadada type extension** syntax element identified by a **nnpfc_reserved_metadada extension_type.** A **nnpfc_metadada extension type size** syntax element is used to carry the size of the **nnpfc_metadada type extension.** These elements are embedded in the **nnpfc_reserved_metadata_extension** metadata of the NNPF and are highlighted by a bold font in table 4a.

Table 4a

| nn_post_filter_characteristics( payloadSize ) { | Descriptor |
|---|---|
| nnpfc_purpose | u(16) |
| nnpfc_id | ue(v) |
| nnpfc_base_flag | u(1) |
| nnpfc_mode_idc | ue(v) |
| if( nnpfc_mode_idc = = 1) { | |
| while( !byte_aligned( ) ) | |
| nnpfc_alignment_zero_bit_a | u(1) |
| nnpfc_tag_uri | st(v) |

(continued)

| | |
|---|---|
| nnpfc_uri | st(v) |
| } | |
| nnpfc_property_present flag | u(1) |
| if( nnpfc_property_present_flag ) { | |
| /* input and output formatting */ | |
| nnpfc_num_input_pics_minus1 | ue(v) |
| if( nnpfc_num_input_pics_minus1 > 0) { | |
| for( i = 0; i <= nnpfc_num_input_pics_minus1; i++ ) | |
| nnpfc_input_pic_filtering_flag[ i ] | u(1) |
| nnpfc_absent_input_pic_zero_flag | u(1) |
| } | |
| if( ChromaUpsamplingFlag ) | |
| nnpfc_out_sub_c_flag | u(1) |
| if( ColourizationFlag ) | |
| nnpfc_out_colour_format_idc | u(2) |
| if( ResolutionResamplingFlag ) { | |
| nnpfc_pic_width_num_minus1 | ue(v) |
| nnpfc_pic_width_denom_minus1 | ue(v) |
| nnpfc_pic_height_num_minus1 | ue(v) |
| nnpfc_pic_height_denom_minus1 | ue(v) |
| } | |
| if( PictureRateUpsamplingFlag ) | |
| for( i = 0; i < nnpfc_num_input_pics_minus1; i++) | |
| nnpfc_interpolated_pics[ i ] | ue(v) |
| if( TemporalExtrapolationFlag) | |
| nnpfc_extrapolated_pics_minus1 | ue(v) |
| if( SpatialExtrapolationFlag ) { | |
| nnpfc_spatial_extrapolation_left_offset | ue(v) |
| nnpfc_spatial_extrapolation_right_offset | ue(v) |
| nnpfc_spatial_extrapolation_top_offset | ue(v) |
| nnpfc_spatial_extrapolation_bottom_offset | ue(v) |
| } | |
| nnpfc_component_last flag | u(1) |
| nnpfc_inp_format_idc | ue(v) |
| nnpfc_auxiliary_inp_idc | ue(v) |
| nnpfc_inp_order_idc | ue(v) |
| if( nnpfc_inp_format_idc = = 1) { | |
| if( nnpfc_inp order idc != 1 ) | |
| nnpfc_inp_tensor_luma_bitdepth_minus8 | ue(v) |
| if( nnpfc_inp_order_idc > 0) | |

| | |
|---|---|
| nnpfc_inp_tensor_chroma_bitdepth_minus8 | ue(v) |
| } | |
| nnpfc_out_format_idc | ue(v) |
| nnpfc_out_order_idc | ue(v) |
| if( nnpfc_out_format_idc == 1) { | |
|   if( nnpfc_out_order_idc != 1 ) | |
|     nnpfc_out_tensor_luma_bitdepth_minus8 | ue(v) |
|   if( nnpfc_out_order_idc != 0 ) | |
|     nnpfc_out_tensor_chroma_bitdepth_minus8 | ue(v) |
| } | |
| nnpfc_separate_colour_description_present_flag | u(1) |
| if( nnpfc_separate_colour_description_present_flag ) { | |
|   nnpfc_colour_primaries | u(8) |
|   nnpfc_transfer_characteristics | u(8) |
|   if( nnpfc_out_format_idc == 1) { | |
|     nnpfc_matrix_coeffs | u(8) |
|     nnpfc_full_range_flag | u(1) |
|   } | |
| } | |
| if( nnpfc_out_order_idc > 0) | |
|   nnpfc_chroma_loc_info_present_flag | u(1) |
| if( nnpfc_chroma_loc_info_present_flag ) | |
|   nnpfc_chroma_sample_loc_type_frame | ue(v) |
| nnpfc_overlap | ue(v) |
| nnpfc_constant_patch_size_flag | u(1) |
| if( nnpfc_constant_patch_size_flag ) { | |
|   nnpfc_patch_width_minus1 | ue(v) |
|   nnpfc_patch_height_minus1 | ue(v) |
| } else { | |
|   nnpfc_extended_patch width_cd_delta_minus1 | ue(v) |
|   nnpfc_extended_patch_height_cd_delta_minus1 | ue(v) |
| } | |
| nnpfc_padding_type | ue(v) |
| if( nnpfc_padding_type == 4) { | |
|   if( nnpfc_inp_order_idc != 1) | |
|     nnpfc_luma_padding_val | ue(v) |
|   if( nnpfc_inp_order_idc != 0 ) { | |
|     nnpfc_cb_padding_val | ue(v) |
|     nnpfc_cr_padding_val | ue(v) |
|   } | |

(continued)

| | |
|---|---|
| } | |
| nnpfc_complexity_info_present_flag | u(1) |
| if( nnpfc_complexity_info_present_flag ) { | |
| nnpfc_parameter_type_idc | u(2) |
| if( nnpfc_parameter_type_idc != 2) | |
| nnpfc_log2_parameter_bit_length_minus3 | u(2) |
| nnpfc_num_parameters_idc | u(6) |
| nnpfc_num_kmac_operations_idc | ue(v) |
| nnpfc_total_kilobyte_size | ue(v) |
| } | |
| nnpfc_num_metadata_extension_bits | ue(v) |
| if( nnpfc_num_metadata_extension_bits > 0) { | |
| if( nnpfc_purpose = = 0 ) { | |
| nnpfc_application_purpose_tag_uri_present_flag | u(1) |
| if( nnpfc_application_purpose_tag_uri_present_flag ) | |
| nnpfc_application_purpose tag_uri | st(v) |
| } | |
| if( SpatialExtrapolationFlag ) | |
| nnpfc_scan_type_idc | u(2) |
| nnpfc_reserved_metadata_extension_type | u(3) |
| nnpfc_metadada_type_extension_size | u(8) |
| nnpfc_metadada_type_extension | u(v) |
| } | |
| /* ISO/IEC 15938-17 bitstream */ | |
| if( nnpfc_mode_idc = = 0) { | |
| while( !byte_aligned( ) ) | |
| nnpfc_alignment_zero_bit_b | u(1) |
| for( i = 0; more_data_in_payload( ); i++ ) | |
| nnpfc_payload_byte[ i ] | b(8) |
| } | |
| } | |

The example of Table 4a illustrates a case where a single metadata extension type is signaled. When multiple metadata extension types for the NNPC are envisaged, multiple blocks comprising the three elements **nnpfc_reserved_metadada extension_type, nnpfc_metadada_ extension_type_size** and **nnpfc_metadada type extension** are repeated for each metadata extension type.

The syntax element **nnpfc_reserved_metadada extension type** allows to characterize the relationship between the energy and the NNPF, in other words, what element is related to the energy information. This corresponds to the three embodiments introduced above. Three values are envisioned. A first value corresponds to an embodiment where the information indicates the increase of energy amount needed to run a selected neural network post filter. A second value corresponds to an embodiment where the information indicates the saved/lost energy consequently to the application of the post filter. A third value corresponds to an embodiment where the information indicates the total energy balance by adding the energy needed to run the post filter and the saved/lost energy consequently to the application of the post filter. Table 5a illustrates example values for the **nnpfc_reserved_metadada extension type** syntax element, the different values being respectively 0, 1 and 2.

Table 5a

| Nnpfc_reserved_metadata_extens ion_type | Content of nnpfc_reserved_metadata_extension |
|---|---|
| 0 | energy requested to apply the NNPF |
| 1 | energy saved/lost as a consequence of the use of the NNPF |
| 2 | final energy balance induced by the use of the NNPF |
| 3..7 | For future use |

Table 6a illustrates syntax corresponding to the first embodiment where an energy parameter related to a neural network post-processing filter indicating the increase of energy amount needed to run a selected neural network post filter is added to the neural network post filter characteristics SEI message. The syntax elements listed in this table replace the syntax elements highlighted in bold in Table 4a. In this case, the value of the **nnpfc_reserved_metadada extension type** syntax element is equal to 0. The value of the **nnpfc_required_energy_ratio** syntax element specifies the increase amount of energy required to apply the neural network post filter.

Table 6a

| | |
|---|---|
| nnpfc_reserved_metadata_extension_type | u(3) |
| nnpfc_metadada_type_extension_size | u(8) |
| nnpfc_required_energy_ratio | u(8) |

Table 7a illustrates syntax corresponding to the second embodiment where an energy parameter related to a neural network post-processing filter indicating the amount of energy that will be either gained or lost by using the content after the application of the NNPF, in other words, as a consequence of using the NNPF, is added to the neural network post filter characteristics SEI message. For example, if the NNPF has for purpose to spatially extrapolate the content, and if other NNPFs are applied after this NNPF, the modification of the content will result in an increase content resolution and thus, might most probably result in an increase consumption of the subsequent NNPFs. Indeed, neural networks' complexity and therefore energy are often related to the input content resolution. Other types of NNPF may result in decreasing the energy consumption. This energy characteristic does not include the energy needed to apply the NNPF itself. The syntax elements listed in this table replace the syntax elements highlighted in bold in Table 4a. In this case, the value of the **nnpfc_reserved_metadada extension type** syntax element is equal to 1. The value of the **nnpfc_energy_ratio** syntax element specifies the amount of energy saved or lost while further using the content after the application of the NNPF.

Table 7a

| | |
|---|---|
| nnpfc_reserved_metadata_extension_type | u(3) |
| nnpfc_metadada_type_extension_size | u(8) |
| nnpfc_energy_ratio | u(8) |

Table 8a illustrates syntax corresponding to the third embodiment where an energy parameter related to a neural network post-processing filter indicating the absolute balance in terms of energy is added to the neural network post filter characteristics SEI message. This balance considers both the energy consumed while applying the NNPF filter and the energy saved or lost while using the content consequently to the application of the NNPF. The syntax elements listed in this table replace the syntax elements highlighted in bold in Table 4a. In this case, the value of the **nnpfc_reserved_metadada extension type** syntax element is equal to 2. The value of the **nnpfc_energy_ratio** syntax element specifies the amount of energy saved or lost while further using the content after the application of the NNPF.

Table 8a

| | |
|---|---|
| nnpfc_reserved_metadata_extension_type | u(3) |
| nnpfc_metadada_type_extension_size | u(8) |

(continued)

| | |
|---|---|
| nnpfc_energy_ratio | u(8) |

The value of the **nnpfc_required_energy_ratio** and the **nnpfc_energy_ratio** syntax elements may be coded according to different variants that apply to the respective embodiments. In these variants, the ratio corresponds either to an increase (or decrease) in terms of energy of the tool in charge of running the NNPF (e.g., the decoder) or it can be the energy increase (or decrease) of a bigger system containing the tool that runs the NNPF (e.g. a set top box).

In a variant, the **nnpfc_required_energy_ratio** and the **nnpfc_energy_ratio** syntax elements are expressed as an absolute value, and are for example coded over 8 bits. The reserved metadata extension could be one byte long in this case.

In a variant, the **nnpfc_required_energy_ratio** and the **nnpfc_energy_ratio** syntax elements are coded over 2 bits to select among a pre-determined set of percentage values, as illustrated in Table 9a. In such embodiment, for example, a value equals to 2 represents an energy reduction rate of 20%.

Table 9a

| nnpfc_required_energy_ratio | Interpretation |
|---|---|
| 0 | The required energy ratio is 5% |
| 1 | The required energy ratio is 10% |
| 2 | The required energy ratio is 20% |
| 3 | The required energy ratio is 30% |

In a variant, the value of the **nnpfc_required_energy_ratio** and the **nnpfc_energy_ratio** syntax elements are expressed as a percentage of energy, when compared to the energy needed without the post filter. Its value is between 0 and 100 and may be coded over 7 bits. It may also be coded as a float value to allow for decimal values of percentage.

In a variant, the value of the **nnpfc_required_energy_ratio** and the **nnpfc_energy_ratio** syntax elements are expressed as a percentage of energy, when compared to the energy needed without the post filter and coded using an 8-bit value as follows:

$$\left\lfloor \frac{100}{2^8 - 1} \times \mathbf{nnpfc\_required\_energy\_ratio} \right\rfloor$$

In a variant, the range of acceptable percentage of energy needed by NNPFs can be a priori restricted. For example, it could be restricted to the range [0%, 10%] or to the range [0%, 30%] or to any other range. In this case, the value of **nnpfc_required_energy_ratio** and the **nnpfc_energy_ratio** can still be coded over 7 bits, with a normalization by 10 (in the first example of range) to retrieve the actual percentages. Another range of percentage values can be envisioned with a corresponding normalization from the coded values in the **nnpfc_required_energy_ratio** and the **nnpfc_energy_ratio.**

In a variant, the value of the **nnpfc_required_energy_ratio** and the **nnpfc_energy_ratio** syntax elements may be expressed as a corresponding or equivalent number multiplication-accumulation (MAC) operations (e.g., a number of MACs that may represent the same energy consumption).

In a variant, the energy may be indicated in another unit that corresponds to different energy levels (e.g., low level, middle level, or high level), which may depend on device characteristics on which the post processing filters may be run.

The two following variants hereafter are related to the second and third embodiment. In this case, the application of the NNPF may result in a gain or a loss and therefore the value of the energy parameter may be positive or negative.

In a variant, the value of the energy parameter is expressed as an absolute value, for example coded over 8 bits, and its sign is interpreted as follows: values below 128 should be considered as negative, values above 128 should be considered as positive, a value = 0 corresponds to a maximal loss of energy (for example equal to 30% of loss) and a value = 255 corresponds to a maximal gain of energy (for example equal to 30% of gain).

In a variant embodiment, the **nnpfc_energy_ratio** syntax element is selected among a pre-determined set of percentage values that comprises both positive and negative values.

In a variant, the syntax is modified to introduce a Boolean flag, for example identified as **nnpfc_energy_ratio_sign_flag** syntax element, representing the sign of the energy. If **nnpfc energy_ratio sign flag** equals 0, the use of the NNPF results in a gain in terms of energy. If **nnpfc energy_ratio sign flag** equals 1, the use of the NNPF results in a loss in terms of energy. In this case, the syntax is modified as in Table 10a.

Table 10a

| | |
|---|---|
| nnpfc_reserved_metadata_extension_type | u(3) |
| nnpfc_metadada_type_extension_size | u(8) |
| nnpfc_energy_ratio_sign_flag | u(1) |
| nnpfc_energy_ratio | u(8) |

Table 11a illustrates a variant of the first embodiment where an energy parameter related to a neural network post-processing filter indicating the increase of energy amount needed to run a selected neural network post filter is added for each purpose **(nnpfc_purpose** syntax element). As introduced above in relation with Table 3, the **nnpfc_purpose** flag corresponds to a list of 8 modes (and their corresponding flags) describing the different tasks that the neural network may implement. In embodiments, each of these tasks may be deactivated independently and the choice of deactivating one or more tasks may be based on some energy consumption criterion. For this reason, the syntax is modified to provide one specific energy flag per mode (i.e., per purpose flag) in the NNPFC syntax.

This parameter is identified respectively by the **nnpfc_required energy_ratio for chroma_upsampling, npfc_required energy_ratio for colourization, nnpfc_required energy_ratio for_resolution_upsampling, nnpfc_required energy_ratio for_picture_rate_upsampling, nnpfc_required energy_ratio for temporal extrapolation,** and **nnpfc_required energy_ratio for spatial extrapolation** syntax elements carried within metadata extension, similarly as above. In the example embodiment of table 11a, the elements are for example coded using an 8-bit value. The different coding types described above (e.g., pre-determined set of percentage values, value ranging from 0 to 100) may also apply to this variant.

Table 11a

| | |
|---|---|
| nnpfc_reserved_metadata_extension_type | u(3) |
| nnpfc_metadada_type_extension_size | u(8) |
| if( ChromaUpsamplingFlag ) | |
| nnpfc_required_energy_ratio_for_chroma_upsampling | u(8) |
| if(ColourizationFlag) | |
| nnpfc_required_energy_ratio_for_colourization | u(8) |
| if(ResolutionResamplingFlag) | |
| nnpfc_required_energy_ratio_for_resolution_upsampling | u(8) |
| if(PictureRateUpsamplingFlag) | |
| nnpfc_required_energy_ratio_for_picture_rate_upsampling | u(8) |
| if(TemporalExtrapolationFlag) | |
| nnpfc_required_energy_ratio_for_temporal_extrapolation | u(8) |
| if(SpatialExtrapolationFlag) | |
| nnpfc_required_energy_ratio_for_spatial_extrapolation | u(8) |

A similar syntax may be used for the second and third embodiments requiring a sign information. This may be done by adding a syntax element to each of the energy ratio indicating the sign to be considered, using a syntax element similarly to Table 10a but for each purpose.

In a variant, the metadata extension further comprises a syntax element to specify the type of coding of the energy value. This is done using a **nnpfc_energy_ratio_coding_type** syntax element to determine how the value is coded. This is illustrated in Table 12a.

Table 12a

| | |
|---|---|
| nnpfc_reserved_metadata_extension_type | u(3) |
| nnpfc_metadada_type_extension_size | u(8) |
| nnpfc_energy_ratio coding_type | u(8) |

(continued)

| | |
|---|---|
| If (nnpfc_energy_ratio_coding_type == 0) or (nnpfc_energy_ratio_coding_type == 3) | |
| nnpfc_energy_ratio | u(8) |
| If (nnpfc_energy_ratio_coding_type == 1) | |
| nnpfc_energy_ratio | u(2) |
| If (nnpfc_energy_ratio_coding_type == 2) | |
| nnpfc_energy_ratio | u(7) |
| If (nnpfc_energy_ratio_coding_type == 4){ | |
| nnpfc energy_sign flag | u(1) |
| nnpfc_energy_ratio | u(8) |
| } | |

In this case, the syntax element is defined as represented in Table 13a.

Table 13a

| nnpfc_energy_ratio_coding_type | Interpretation |
|---|---|
| 0 | The energy ratio is an absolute value coded over 8 bits |
| 1 | The energy ratio is a quantized energy coded over 2 bits |
| 2 | The energy ratio is a percentage coded over 7 bits |
| 3 | The energy ratio is interpreted as a signed value with 128 corresponding to 0 |
| 4 | The energy ratio is interpreted as a positive value and accompanied by an additional flag indicating its sign |

For all examples of syntax described above, the syntax elements are comprised in the reserved metadata extension section of a SEI message. These syntax elements may be positioned outside of this section (for example at the top level of the structure or within another section) while still providing the same functionality.

In another variant where the energy information is positioned outside of the reserved metadata extension, the syntax can be modified as follows.

Table 14a

| nn_post_filter_characteristics( payloadSize ) { | Descriptor |
|---|---|
| nnpfc_purpose | u(16) |
| nnpfc_id | ue(v) |
| nnpfc_base_flag | u(1) |
| nnpfc_mode_idc | ue(v) |
| if( nnpfc_mode_idc = = 1 ) { | |
| while( !byte_aligned( ) ) | |
| nnpfc_alignment_zero_bit_a | u(1) |
| nnpfc_tag_uri | st(v) |
| nnpfc_uri | st(v) |
| } | |
| nnpfc_property_present flag | u(1) |
| if( nnpfc_property_present_flag ) { | |

(continued)

| | |
|---|---|
| /* input and output formatting */ | |
| nnpfc_nurnjnput_pics_minus1 | ue(v) |
| if( nnpfc_num_input_pics_minus1 > 0) { | |
|   for( i = 0; i <= nnpfc_num_input_pics_minus1; i++ ) | |
|     nnpfc_input_pic_filtering_flag[ i ] | u(1) |
|     nnpfc_absent_input_pic_zero_flag | u(1) |
|   } | |
| if( ChromaUpsamplingFlag ) | |
|   nnpfc_out_sub_c_flag | u(1) |
| if( ColourizationFlag ) | |
|   nnpfc_out_colour_format_idc | u(2) |
| if( ResolutionResamplingFlag ) { | |
|   nnpfc_pic_width_num_minus1 | ue(v) |
|   nnpfc_pic_width_denom_minus1 | ue(v) |
|   nnpfc_pic_height_num_minus1 | ue(v) |
|   nnpfc_pic_height_denom_minus1 | ue(v) |
| } | |
| if( PictureRateUpsamplingFlag ) | |
|   for( i = 0; i < nnpfc_num_input_pics_minus1; i++) | |
|     nnpfc_interpolated_pics[ i ] | ue(v) |
| if( TemporalExtrapolationFlag) | |
|   nnpfc extrapolated_pics_minus1 | ue(v) |
| if( SpatialExtrapolationFlag ) { | |
|   nnpfc_spatial_extrapolation_left offset | ue(v) |
|   nnpfc_spatial_extrapolation_right offset | ue(v) |
|   nnpfc_spatial_extrapolation_top_offset | ue(v) |
|   nnpfc_spatial_extrapolation_bottom_offset | ue(v) |
| } | |
| nnpfc_component_last flag | u(1) |
| nnpfc_inp_format_idc | ue(v) |
| nnpfc_auxiliary_inp idc | ue(v) |
| nnpfc_inp_order_idc | ue(v) |
| if( nnpfc_inp_format_idc = = 1) { | |
|   if( nnpfc_inp order idc != 1 ) | |
|     nnpfc_inp_tensor_luma_bitdepth_minus8 | ue(v) |
|   if( nnpfc_inp_order_idc > 0) | |
|     nnpfc_inp_tensor_chroma_bitdepth_minus8 | ue(v) |
| } | |
| nnpfc_out_format_idc | ue(v) |
| nnpfc_out_order_idc | ue(v) |

(continued)

| | |
|---|---|
| if( nnpfc_out_format_idc = = 1) { | |
| if( nnpfc_out_order_idc != 1 ) | |
| nnpfc_out_tensor_luma_bitdepth_minus8 | ue(v) |
| if( nnpfc_out_order_idc != 0 ) | |
| nnpfc_out_tensor_chroma_bitdepth_minus8 | ue(v) |
| } | |
| nnpfc_separate_colour_description_present_flag | u(1) |
| if( nnpfc_separate_colour_description_present_flag ) { | |
| nnpfc colour_primaries | u(8) |
| nnpfc_transfer_characteristics | u(8) |
| if( nnpfc_out_format_idc = = 1) { | |
| nnpfc_matrix_coeffs | u(8) |
| nnpfc_full_range_flag | u(1) |
| } | |
| } | |
| if( nnpfc_out_order_idc > 0) | |
| nnpfc_chroma_loc info_present_flag | u(1) |
| if( nnpfc_chroma_loc_info_present_flag ) | |
| nnpfc_chroma_sample_loc_type_frame | ue(v) |
| nnpfc_overlap | ue(v) |
| nnpfc_constant_patch_size_flag | u(1) |
| if( nnpfc_constant_patch_size_flag ) { | |
| nnpfc_patch_width_minus1 | ue(v) |
| nnpfc_patch_height_minus1 | ue(v) |
| } else { | |
| nnpfc_extended_patch width_cd_delta_minus1 | ue(v) |
| nnpfc_extended_patch_height_cd_delta_minus1 | ue(v) |
| } | |
| nnpfc_padding_type | ue(v) |
| if( nnpfc_padding_type = = 4) { | |
| if( nnpfc_inp_order_idc != 1) | |
| nnpfc_luma_padding val | ue(v) |
| if( nnpfc_inp_order_idc != 0 ) { | |
| nnpfc_cb_padding_val | ue(v) |
| nnpfc_cr_padding_val | ue(v) |
| } | |
| } | |
| nnpfc_complexity_info_present_flag | u(1) |
| if( nnpfc_complexity_info_present_flag ) { | |
| nnpfc_parameter_type_idc | u(2) |

(continued)

| | |
|---|---|
| if( nnpfc_parameter_type_idc != 2) | |
| nnpfc_log2_parameter_bit_length_minus3 | u(2) |
| nnpfc_num_parameters_idc | u(6) |
| nnpfc_num_kmac_operations_idc | ue(v) |
| nnpfc_total_kilobyte_size | ue(v) |
| } | |
| nnpfc_num_metadata_extension_bits | ue(v) |
| if( nnpfc_num_metadata_extension_bits > 0) { | |
| if( nnpfc_purpose = = 0 ) { | |
| nnpfc_application_purpose tag uri_present flag | u(1) |
| if( nnpfc_application_purpose_tag_uri_present_flag ) | |
| nnpfc_application_purpose_tag_uri | st(v) |
| } | |
| }if( SpatialExtrapolationFlag ) | |
| } nnpfc_scan_type_idc | u(2) |
| **nnpfc_energy_ratio** | **u(8)** |
| } | |
| } | |
| /* ISO/IEC 15938-17 bitstream */ | |
| if( nnpfc_mode_idc = = 0) { | |
| while( !byte_aligned( ) ) | |
| nnpfc_alignment_zero_bit_b | u(1) |
| for( i = 0; more_data_in_payload( ); i++ ) | |
| nnpfc_payload_byte[ i ] | b(8) |
| } | |
| } | |

In this variant, the nnpfc_energy_ratio as used in the second and third embodiments can be replaced by the nnpfc_required_energy_ratio as used in the first embodiments. An additional nnpfc_ratio_sign_flag can also be added. All coding types described above may also be used in such variant. In addition, one energy ratio per NNPF purpose may be envisioned with a syntax similar to the syntax described in the tables above.

In a variant, a syntax element (e.g., a flag named **nnpfc energy_info_present flag)** may be used (e.g., included in one or more of the SEI messages described herein) to indicate whether information related to energy information of the NNPF (e.g., energy that may be used by applying the NNPF, an energy cost or saving that may incur as a consequence of having applied the NNPF, a (e.g., total) energy balance of applying the NNPF and using its output) may be signaled (e.g., present in the corresponding SEI message). This syntax element (and the corresponding NNPF energy information) may be provided in any section of an SEI message, such as, for example, inside or outside the section triggered by a syntax element **nnpfc complexity_info_present flag,** inside or outside the section triggered by a syntax element **nnpfc_property_present flag,** and/or the like. When the syntax element is set to a certain value (e.g., the nnpfc energy_info_present flag is set to 1), it may indicate that one or more other syntax elements related to energy information of the NNPF (e.g., the amount of energy required to run the NNPF and/or the amount of energy that may be gained or lost (e.g., a net energy gain or a net energy loss) from using content generated or modified by the NNPF, and/or the total balance of the application of the NNPF and the further use of its output) may be present (e.g., in an SEI message). When the syntax element is set to another value (e.g., the nnpfc energy_info_present flag is set to 0), it may indicate that no other syntax elements related to energy information of the NNPF (e.g., the amount of energy required to run the NNPF and/or the amount of energy that may be gained or lost (e.g., a net energy gain or a net energy loss) from using content generated or modified by the NNPF, and/or the total balance of the application of the NNPF and the further use of its output) are present (e.g., in the SEI message).

In examples, the NNPF energy related information that may be controlled by the aforementioned syntax element (e.g., nnpfc energy_info_present flag) may include first information indicative of energy used to apply the NNPF and/or second information indicative of the energy saving (or energy cost) that may result from (e.g., incurred as a consequence of) applying the NNPF. In examples, the first information may include the **nnpfc_required_energy_ratio** syntax element described herein, and the second information may include the **nnpfc_energy_ratio** syntax element described herein. Such first and/or second information may allow a device to make a choice on whether to apply the NNPF (e.g., apply the NNPF if there is a net energy gain from the application, and not apply the NNPF if there is a net energy loss from the application). In examples, the nnpfc energy_info_present flag syntax element may control any combination of energy information as described in the above embodiments.

Table 15a below illustrates example syntax comprising the aforementioned nnpfc energy_info_present flag.

Table 15a

| nn_post_filter_characteristics( payloadSize ) { | Descriptor |
|---|---|
| nnpfc_purpose | u(16) |
| nnpfc_id | ue(v) |
| nnpfc_base_flag | u(1) |
| nnpfc mode_idc | ue(v) |
| if( nnpfc_mode_idc = = 1) { | |
| while( !byte_aligned( ) ) | |
| nnpfc_alignment_zero_bit_a | u(1) |
| nnpfc_tag_uri | st(v) |
| nnpfc_uri | st(v) |
| } | |
| nnpfc_property_present flag | u(1) |
| if( nnpfc_property_present_flag ) { | |
| /* input and output formatting */ | |
| nnpfc_num_input_pics_minus1 | ue(v) |
| if( nnpfc_num_input_pics_minus1 > 0) { | |
| for( i = 0; i <= nnpfc_num_input_pics_minus1; i++) | |
| nnpfc_input_pic_filtering_flag[ i ] | u(1) |
| nnpfc_absent_input_pic_zero_flag | u(1) |
| } | |
| if( ChromaUpsamplingFlag ) | |
| nnpfc_out_sub_c_flag | u(1) |
| if( ColourizationFlag ) | |
| nnpfc out colour format_idc | u(2) |
| if( ResolutionResamplingFlag ) { | |
| nnpfc_pic_width_num_minus1 | ue(v) |
| nnpfc_pic_width_denom_minus1 | ue(v) |
| nnpfc_pic_height_num_minus1 | ue(v) |
| nnpfc_pic_height_denom_minus1 | ue(v) |
| } | |
| if( PictureRateUpsamplingFlag ) | |

(continued)

| | |
|---|---|
| for( i = 0; i < nnpfc_num_input_pics_minus1; i++ ) | |
| nnpfc_interpolated_pics[ i ] | ue(v) |
| if( TemporalExtrapolationFlag ) | |
| nnpfc_extrapolated_pics_minus1 | ue(v) |
| if( SpatialExtrapolationFlag ) { | |
| nnpfc spatial extrapolation_left offset | ue(v) |
| nnpfc_spatial_extrapolation_right_offset | ue(v) |
| nnpfc_spatial_extrapolation_top_offset | ue(v) |
| nnpfc_spatial_extrapolation_bottom_offset | ue(v) |
| } | |
| nnpfc_component_last_flag | u(1) |
| nnpfc_inp_format_idc | ue(v) |
| nnpfc_auxiliary_inp_idc | ue(v) |
| nnpfc_inp_order_idc | ue(v) |
| if( nnpfc_inp_format_idc = = 1) { | |
| if( nnpfc_inp_order_idc != 1) | |
| nnpfc_inp_tensor_luma_bitdepth_minus8 | ue(v) |
| if( nnpfc_inp_order_idc > 0) | |
| nnpfc_inp_tensor_chroma_bitdepth_minus8 | ue(v) |
| } | |
| nnpfc_out_format_idc | ue(v) |
| nnpfc_out_order_idc | ue(v) |
| if( nnpfc_out_format_idc = = 1) { | |
| if( nnpfc_out_order_idc != 1) | |
| nnpfc_out_tensor_luma_bitdepth_minus8 | ue(v) |
| if( nnpfc_out_order_idc != 0) | |
| nnpfc_out_tensor_chroma_bitdepth_minus8 | ue(v) |
| } | |
| nnpfc_separate_colour_description_present_flag | u(1) |
| if( nnpfc_separate_colour_description_present_flag ) { | |
| nnpfc_colour_primaries | u(8) |
| nnpfc_transfer_characteristics | u(8) |
| if( nnpfc_out_format_idc = = 1) { | |
| nnpfc_matrix_coeffs | u(8) |
| nnpfc_full_range_flag | u(1) |
| } | |
| } | |
| if( nnpfc_out_order_idc > 0) | |
| nnpfc_chroma_loc_info_present_flag | u(1) |
| if( nnpfc_chroma_loc_info_present_flag ) | |

(continued)

| | |
|---|---|
| nnpfc_chroma_sample_loc_type_frame | ue(v) |
| nnpfc_overlap | ue(v) |
| nnpfc_constant_patch_size_flag | u(1) |
| if( nnpfc_constant_patch_size_flag ) { | |
|   nnpfc_patch_width_minus1 | ue(v) |
|   nnpfc_patch_height_minus1 | ue(v) |
| } else { | |
|   nnpfc_extended_patch_width_cd_delta_minus1 | ue(v) |
|   nnpfc_extended_patch_height_cd_delta_minus1 | ue(v) |
| } | |
| nnpfc_padding_type | ue(v) |
| if( nnpfc_padding_type = = 4) { | |
|   if( nnpfc inp order_idc != 1) | |
|     nnpfc luma_padding val | ue(v) |
|   if( nnpfc inp order_idc != 0) { | |
|     nnpfc_cb_padding_val | ue(v) |
|     nnpfc cr_padding val | ue(v) |
|   } | |
| } | |
| nnpfc_complexity_info_present_flag | u(1) |
| if( nnpfc_complexity_info_present_flag ) { | |
|   nnpfc_parameter_type_idc | u(2) |
|   if( nnpfc_parameter_type_idc != 2) | |
|     nnpfc_log2_parameter_bit_length_minus3 | u(2) |
|   nnpfc_num_parameters_idc | u(6) |
|   nnpfc_num_kmac_operations_idc | ue(v) |
|   nnpfc_total_kilobyte_size | ue(v) |
| } | |
| nnpfc_num_metadata_extension_bits | ue(v) |
| if( nnpfc_num_metadata_extension_bits > 0) { | |
|   if( nnpfc_purpose = = 0) { | |
|     nnpfc_application_purpose tag_uri_present_flag | u(1) |
|     if( nnpfc_application_purpose_tag_uri_present_flag ) | |
|       nnpfc_application_purpose_tag_uri | st(v) |
|   } | |
|   if( SpatialExtrapolationFlag ) | |
|     nnpfc_scan_type_idc | u(2) |
|   if (nnpfc_energy_info_present_flag) { | |
|     nnpfc_required_energy_ratio | u(8) |
|     nnpfc_energy_ratio_sgn_flag | u(1) |

(continued)

| nnpfc_energy_ratio | u(8) |
|---|---|
| } | |
| } | |
| } | |
| /* ISO/IEC 15938-17 bitstream */ | |
| if( nnpfc_mode_idc = = 0 ) { | |
| while( !byte_aligned( ) ) | |
| nnpfc_alignment_zero_bit_b | u(1) |
| for( i = 0; more_data_in_payload( ); i++ ) | |
| nnpfc_payload_byte[ i ] | b(8) |
| } | |

In some embodiments described herein, it is proposed to use the NNPFC mode metadata of NNPFC-SEI messages for providing information indicative of energy characteristics of the neural network post-processing filter.

Table 4b illustrates the first embodiment where an energy parameter related to a neural network post-processing filter indicating the increase of energy amount needed to run a selected neural network post filter is added to the neural network post filter characteristics SEI message. This energy parameter is identified by the **nnpfc_required_energy_ratio** syntax element and carried within a section using the **nnpfc_mode_idc** metadata and triggered when **nnpfc_mode_idc** is equal to 2 or 3. Indeed, to have the new information related to the energy together with the already existing **nnpfc_mode_idc** values, two new modes are defined that will combine both information. It is highlighted by a bold font in table 4b and can take different forms. In the example embodiment of table 4b, it is coded using an 8 bit value.

Table 4b

| nn_post_filter_characteristics( payloadSize ) { | Descriptor |
|---|---|
| nnpfc_purpose | u(16) |
| nnpfc_id | ue(v) |
| nnpfc_base_flag | u(1) |
| nnpfc_mode_idc | ue(v) |
| If(( nnpfc_mode_idc = = 1 ) **or ( nnpfc_mode_idc = = 3 ))** { | |
| while( !byte_aligned( ) ) | |
| nnpfc_alignment_zero_bit_a | u(1) |
| nnpfc_tag_uri | st(v) |
| nnpfc_uri | st(v) |
| } | |
| nnpfc_property_present flag | u(1) |
| if( nnpfc_property_present_flag ) { | |
| /* input and output formatting */ | |
| nnpfc_num_input_pics_minus1 | ue(v) |
| if( nnpfc_num_input_pics_minus1 > 0 ) { | |
| for( i = 0; i <= nnpfc_num_input_pics_minus1; i++ ) | |
| nnpfc_input_pic_filtering_flag[ i ] | u(1) |
| nnpfc_absent_input_pic_zero_flag | u(1) |
| } | |

| | |
|---|---|
| if( ChromaUpsamplingFlag ) | |
| nnpfc_out_sub_c_flag | u(1) |
| if( ColourizationFlag ) | |
| nnpfc_out_colour_format_idc | u(2) |
| if( ResolutionResamplingFlag ) { | |
| nnpfc_pic_width_num_minus1 | ue(v) |
| nnpfc_pic_width_denom_minus1 | ue(v) |
| nnpfc_pic_height_num_minus1 | ue(v) |
| nnpfc_pic_height_denom_minus1 | ue(v) |
| } | |
| if( PictureRateUpsamplingFlag ) | |
| for( i = 0; i < nnpfc_num_input_pics_minus1; i++) | |
| nnpfc_interpolated_pics[ i ] | ue(v) |
| if( TemporalExtrapolationFlag) | |
| nnpfc_extrapolated_pics_minus1 | ue(v) |
| if( SpatialExtrapolationFlag ) { | |
| nnpfc_spatial_extrapolation_left_offset | ue(v) |
| nnpfc_spatial_extrapolation_right_offset | ue(v) |
| nnpfc_spatial_extrapolation_top_offset | ue(v) |
| nnpfc_spatial_extrapolation_bottom_offset | ue(v) |
| } | |
| nnpfc_component_last_flag | u(1) |
| nnpfc_inp_format_idc | ue(v) |
| nnpfc_auxiliary_inp idc | ue(v) |
| nnpfc_inp_order_idc | ue(v) |
| if( nnpfc_inp_format_idc = = 1) { | |
| if( nnpfc_inp order idc != 1 ) | |
| nnpfc_inp_tensor_luma_bitdepth_minus8 | ue(v) |
| if( nnpfc_inp_order_idc > 0) | |
| nnpfc_inp_tensor_chroma_bitdepth_minus8 | ue(v) |
| } | |
| nnpfc_out_format_idc | ue(v) |
| nnpfc_out_order_idc | ue(v) |
| if( nnpfc_out_format_idc = = 1) { | |
| if( nnpfc_out_order_idc != 1 ) | |
| nnpfc_out_tensor_luma_bitdepth_minus8 | ue(v) |
| if( nnpfc_out_order_idc != 0 ) | |
| nnpfc_out_tensor_chroma_bitdepth_minus8 | ue(v) |
| } | |
| nnpfc_separate_colour_description_present_flag | u(1) |

(continued)

| | |
|---|---|
| if( nnpfc_separate_colour_description_present_flag ) { | |
| nnpfc_colour_primaries | u(8) |
| nnpfc_transfer_characteristics | u(8) |
| if( nnpfc_out_format_idc == 1) { | |
| nnpfc_matrix_coeffs | u(8) |
| nnpfc_full_range_flag | u(1) |
| } | |
| } | |
| if( nnpfc_out_order_idc > 0) | |
| nnpfc_chroma_loc_info_present_flag | u(1) |
| if( nnpfc_chroma_loc_info_present_flag ) | |
| nnpfc_chroma_sample_loc_type_frame | ue(v) |
| nnpfc_overlap | ue(v) |
| nnpfc_constant_patch_size_flag | u(1) |
| if( nnpfc_constant_patch_size_flag ) { | |
| nnpfc_patch_width_minus1 | ue(v) |
| nnpfc_patch_height_minus1 | ue(v) |
| } else { | |
| nnpfc_extended_patch_width_cd_delta_minus1 | ue(v) |
| nnpfc_extended_patch_heigh_ cd_delta_minus1 | ue(v) |
| } | |
| nnpfc_padding_type | ue(v) |
| if( nnpfc_padding_type == 4) { | |
| if( nnpfc_inp_order_idc != 1) | |
| nnpfc_luma_padding_val | ue(v) |
| if( nnpfc_inp_order_idc != 0 ) { | |
| nnpfc_cb_padding_val | ue(v) |
| nnpfc_cr_padding_val | ue(v) |
| } | |
| } | |
| nnpfc_complexity_info_present_flag | u(1) |
| if( nnpfc_complexity_info_present_flag ) { | |
| nnpfc_parameter_type_idc | u(2) |
| if( nnpfc_parameter_type_idc != 2) | |
| nnpfc_log2_parameter_bit_length_minus3 | u(2) |
| nnpfc_num_parameters_idc | u(6) |
| nnpfc_num_kmac_operations_idc | ue(v) |
| nnpfc_total_kilobyte_size | ue(v) |
| } | |
| nnpfc_num_metadata_extension_bits | ue(v) |

(continued)

| | |
|---|---|
| if( nnpfc_num_metadata_extension_bits > 0) { | |
| if( nnpfc_purpose = = 0 ) { | |
| nnpfc_application_purpose_tag_uri_present_flag | u(1) |
| if( nnpfc_application_purpose_tag_uri_present_flag ) | |
| nnpfc_application_purpose tag_uri | st(v) |
| } | |
| if( SpatialExtrapolationFlag ) | |
| nnpfc_scan_type_idc | u(2) |
| nnpfc_reserved_metadata_extension | u(v) |
| } | |
| } | |
| /* ISO/IEC 15938-17 bitstream */ | |
| If(( nnpfc_mode_idc = = 0 ) or ( **nnpfc_mode_idc = = 2 )) {** | |
| while( !byte_aligned( ) ) | |
| nnpfc_alignment_zero_bit_b | u(1) |
| for( i = 0; more_data_in_payload( ); i++ ) | |
| nnpfc_payload_byte[ i ] | b(8) |
| } | |
| **if (nnpfc_mode_idc == 2) or (nnpdf_mode_idc == 3)** | |
| **nnpfc_required_energy_ratio** | **u(8)** |
| } | |

In this syntax, **nnpfc_mode_idc** may use two additional values. A **nnpfc_mode_idc** equal to 2 indicates that the neural network information is contained in the NNPFC SEI message, and the information related to the neural network post-filter is in the format of an ISO/IEC 15938-17 bitstream, and comprises additional information on energy characteristics related to the NNPF. A **nnpfc_mode_idc** equal to 3 indicates that the neural network information is identified by the URI indicated by **nnpfc_uri** with the format identified by the tag URI **nnpfc_tag_uri,** and that some additional information on energy characteristics related to the NNPF are provided.

The value of **nnpfc_mode_idc** shall be in the range of 0 to 255, inclusive. Values of 4 to 255, inclusive, for **nnpfc_mode_idc** are reserved for future use by ITU-T | ISO/IEC and shall not be present in bitstreams conforming to this version of this Specification. Decoders conforming to this version of this Specification shall ignore NNPFC SEI messages with **nnpfc_mode_idc** in the range of 4 to 255, inclusive.

The value of the **nnpfc_required_energy_ratio** syntax element specifies the increase amount of energy required to apply the post-filter. This value may be an absolute energy value. It may also be computed with reference to the overall amount of energy required by the tool in charge of running the NNPF (e.g., the decoder), thus allowing to compare one or more NNPF to the overall decoding functions. It may also be compared with reference to a bigger system such as the device itself.

In at least one variant of the first embodiment, the **nnpfc_required_energy_ratio** syntax element is coded over 2 bits to select among a pre-determined set of percentage values, as illustrated in Table 5b. In such embodiment, for example, **nnpfc_required_energy_ratio** equals to 2 represents an energy reduction rate of 20%.

Table 5b

| nnpfc_required_energy_ratio | Interpretation |
|---|---|
| 0 | The required energy ratio is 5% |
| 1 | The required energy ratio is 10% |
| 2 | The required energy ratio is 20% |

(continued)

| nnpfc_required_energy_ratio | Interpretation |
|---|---|
| 3 | The required energy ratio is 30% |

In at least one variant of the first embodiment, the value of the **nnpfc_required_energy_ratio** syntax element is expressed as a percentage of energy, when compared to the energy needed without the post filter. Its value is between 0 and 100 and may be coded over 7 bits. It may also be coded as a float value to allow for decimal values of percentage.

In at least one variant of the first embodiment, the value of the **nnpfc_required_energy_ratio** syntax element is expressed as a percentage of energy, when compared to the energy needed without the post filter and coded using an 8-bit value as follows:

$$\left\lfloor \frac{100}{2^8 - 1} \times \mathbf{nnpfc\_required\_energy\_ratio} \right\rfloor$$

In at least one variant of the above embodiment, the range of acceptable percentage of energy needed by NNPFs can be a priori restricted. For example it could be restricted to the range [0%, 10%] or to the range [0%, 30%] or to any other range. In this case, the value of **nnpfc_required_energy_ratio** can still be coded over 7 bits, with a normalization by 10 (in the first example of range) to retrieve the actual percentages. Another range of percentage values can be envisioned with a corresponding normalization from the coded values in the **nnpfc_required_energy_ratio.**

In a variant, the value of the **nnpfc_required_energy_ratio** and the **nnpfc_energy_ratio** syntax elements are expressed as a corresponding or equivalent number of multiplication-accumulation (MAC) operations (e.g., a number of MACs that may represent the same energy consumption).

In a variant, the energy may be indicated in another unit that corresponds to different energy levels (e.g., low level, middle level, or high level), which may depend on device characteristics on which the post processing filters may be run.

Table 5b illustrates a variant of the first embodiment where an energy parameter related to a neural network post-processing filter indicating the increase of energy amount needed to run a selected neural network post filter is added for each mode **(nnpfc_purpose** syntax element). As introduced above in relation with Table 3, the **nnpfc_purpose** flag corresponds to a list of 8 modes (and their corresponding flags) describing the different tasks that the neural network may implement. In embodiments, each of these tasks may be deactivated independently and the choice of deactivating one or more tasks may be based on some energy consumption criterion. For this reason, the syntax is modified to provide one specific energy flag per mode (i.e., per purpose flag) in the NNPFC syntax.

This parameter is identified respectively by the **nnpfc_required energy_ratio for chroma_upsampling, npfc_required energy_ratio for colourization, nnpfc_required energy_ratio for_resolution_upsampling, nnpfc_required energy_ratio for_picture_rate_upsampling, nnpfc_required energy_ratio for temporal extrapolation,** and **nnpfc_required energy_ratio for spatial extrapolation** syntax elements carried within a section using the **nnpfc_mode_idc** metadata, triggered when **nnpfc_mode_idc** is equal to 2 or 3 and triggered by individual purpose flags related to the corresponding modes. These elements are highlighted by a bold font in table 6b and can take different forms. In the example embodiment of table 6b, the elements are for example coded using an 8-bit value. The different coding types described above (e.g., pre-determined set of percentage values, value ranging from 0 to 100) may also apply to this variant.

Table 6b

| nn_post_filter_characteristics( payloadSize ) { | Descriptor |
|---|---|
| nnpfc_purpose | u(16) |
| nnpfc_id | ue(v) |
| nnpfc_base_flag | u(1) |
| nnpfc_mode_idc | ue(v) |
| if(( nnpfc_mode_idc = = 1 **or (nnpfc_mode_idc = = 3))** { | |
| while( !byte_aligned( ) ) | |
| nnpfc_alignment_zero_bit_a | u(1) |
| nnpfc_tag_uri | st(v) |
| nnpfc_uri | st(v) |

(continued)

| | |
|---|---|
| } | |
| nnpfc_property_present flag | u(1) |
| if( nnpfc_property_present_flag ) { | |
| /* input and output formatting */ | |
| nnpfc_num_input_pics_minus1 | ue(v) |
| if( nnpfc_num_input_pics_minus1 > 0) { | |
| for( i = 0; i <= nnpfc_num_input_pics_minus1; i++) | |
| nnpfc_input_pic_filtering_flag[ i ] | u(1) |
| nnpfc_absent_input_pic_zero_flag | u(1) |
| } | |
| if( ChromaUpsamplingFlag ) | |
| nnpfc_out_sub_c_flag | u(1) |
| if( ColourizationFlag ) | |
| nnpfc out colour format_idc | u(2) |
| if( ResolutionResamplingFlag ) { | |
| nnpfc_pic_width_num_minus1 | ue(v) |
| nnpfc_pic_width_denom_minus1 | ue(v) |
| nnpfc_pic_height_num_minus1 | ue(v) |
| nnpfc_pic_height_denom_minus1 | ue(v) |
| } | |
| if( PictureRateUpsamplingFlag ) | |
| for( i = 0; i < nnpfc_num_input_pics_minus1; i++ ) | |
| nnpfc_interpolated_pics[ i ] | ue(v) |
| if( TemporalExtrapolationFlag ) | |
| nnpfc_extrapolated_pics_minus1 | ue(v) |
| if( SpatialExtrapolationFlag ) { | |
| nnpfc_spatial_extrapolation_left_offset | ue(v) |
| nnpfc_spatial_extrapolation_right_offset | ue(v) |
| nnpfc_spatial_extrapolation_top_offset | ue(v) |
| nnpfc_spatial_extrapolation_bottom_offset | ue(v) |
| } | |
| nnpfc_component_last_flag | u(1) |
| nnpfc_inp_format_idc | ue(v) |
| nnpfc_auxiliary_inp_idc | ue(v) |
| nnpfc_inp_order_idc | ue(v) |
| if( nnpfc_inp_format_idc = = 1) { | |
| if( nnpfc inp order_idc != 1) | |
| nnpfc_inp_tensor_luma_bitdepth_minus8 | ue(v) |
| if( nnpfc_inp_order_idc > 0) | |
| nnpfc_inp_tensor_chroma_bitdepth_minus8 | ue(v) |

(continued)

| | |
|---|---|
| } | |
| nnpfc_out_format_idc | ue(v) |
| nnpfc_out_order_idc | ue(v) |
| if( nnpfc_out_format_idc = = 1 ) { | |
| if( nnpfc_out_order_idc != 1) | |
| nnpfc_out_tensor_luma_bitdepth_minus8 | ue(v) |
| if( nnpfc_out_order_idc != 0) | |
| nnpfc_out_tensor_chroma_bitdepth_minus8 | ue(v) |
| } | |
| nnpfc_separate_colour_description_present_flag | u(1) |
| if( nnpfc_separate_colour_description_present_flag ) { | |
| nnpfc_colour_primaries | u(8) |
| nnpfc_transfer_characteristics | u(8) |
| if( nnpfc_out_format_idc = = 1 ) { | |
| nnpfc_matrix_coeffs | u(8) |
| nnpfc_full_range_flag | u(1) |
| } | |
| } | |
| if( nnpfc_out_order_idc > 0) | |
| nnpfc_chroma_loc_info_present_flag | u(1) |
| if( nnpfc_chroma_loc_info_present_flag ) | |
| nnpfc_chroma_sample_loc_type_frame | ue(v) |
| nnpfc_overlap | ue(v) |
| nnpfc_constant_patch_size_flag | u(1) |
| if( nnpfc_constant_patch_size_flag ) { | |
| nnpfc_patch_width_minus1 | ue(v) |
| nnpfc_patch_height_minus1 | ue(v) |
| } else { | |
| nnpfc_extended_patch_width_cd_delta_minus1 | ue(v) |
| nnpfc_extended_patch_height_cd_delta_minus1 | ue(v) |
| } | |
| nnpfc_padding_type | ue(v) |
| if( nnpfc_padding_type = = 4) { | |
| if( nnpfc_inp_order_idc != 1) | |
| nnpfc_luma_padding val | ue(v) |
| if( nnpfc inp order_idc != 0) { | |
| nnpfc cb_padding val | ue(v) |
| nnpfc_cr_padding_val | ue(v) |
| } | |
| } | |

(continued)

| | |
|---|---|
| nnpfc_complexity_info_present_flag | u(1) |
| if( nnpfc_complexity_info_present_flag ) { | |
|   nnpfc_parameter_type_idc | u(2) |
|   if( nnpfc_parameter_type_idc != 2) | |
|     nnpfc_log2_parameter_bit_length_minus3 | u(2) |
|   nnpfc_num_parameters_idc | u(6) |
|   nnpfc_num_kmac_operations_idc | ue(v) |
|   nnpfc_total_kilobyte_size | ue(v) |
| } | |
|   nnpfc_num_metadata_extension_bits | ue(v) |
|   if( nnpfc_num_metadata_extension_bits > 0) { | |
|     if( nnpfc_purpose = = 0) { | |
|       nnpfc application_purpose tag_uri_present flag | u(1) |
|       if( nnpfc_application_purpose_tag_uri_present_flag ) | |
|         nnpfc_application_purpose tag_uri | st(v) |
|     } | |
|     if( SpatialExtrapolationFlag ) | |
|       nnpfc_scan_type_idc | u(2) |
|     nnpfc_reserved_metadata_extension | u(v) |
|     } | |
|   } | |
| /* ISO/IEC 15938-17 bitstream */ | |
| if(( nnpfc_mode_idc = = 0 **or (nnpfc_mode_idc = = 2))** { | |
|   while( !byte_aligned( ) ) | |
|     nnpfc_alignment_zero_bit_b | u(1) |
|   for( i = 0; more_data_in_payload( ); i++ ) | |
|     nnpfc_payload_byte[ i ] | b(8) |
|   } | |
| **if (nnpfc_mode_idc == 2) or (nnpdf_mode_idc == 3){** | |
| **  if( ChromaUpsamplingFlag )** | |
| **    nnpfc_required_energy_ratio_for_chroma_upsampling** | **u(8)** |
| **  if(ColourizationFlag)** | |
| **    nnpfc_required_energy_ratio_for_colourization** | **u(8)** |
| **  if(ResolutionResamplingFlag)** | |
| **nnpfc_required_energy_ratio_for_resolution_upsampling** | **u(8)** |
| **  if(PictureRateUpsamplingFlag)** | |
| **nnpfc_required_energy_ratio_for_picture_rate_upsampling** | **u(8)** |
| **  if(TemporalExtrapolationFlag)** | |
| **nnpfc_required_energy_ratio_for_temporal_extrapolation** | **u(8)** |
| **  if(SpatialExtrapolationFlag)** | |

(continued)

| | |
|---|---|
| **nnpfc_required_energy_ratio_for_spatial_extrapolation** | **u(8)** |
| **}** | |
| } | |

In the second embodiment, the energy characteristics carried by the NNPFC SEI message specifies the amount of energy that may be either gained or lost by using the content after the application of the NNPF, in other words, as a consequence of using the NNPF. For example, if the NNPF has for purpose to spatially extrapolate the content, and if other NNPFs are applied after this NNPF, the modification of the content will result in an increase content resolution and thus, might most probably result in an increase consumption of the subsequent NNPFs. Indeed, neural networks' complexity and therefore energy are often related to the input content resolution. Other types of NNPF may result in decreasing the energy consumption.

This energy characteristic does not include the energy needed to apply the NNPF itself.

The amount of energy is carried by a **nnpfc_energy_ratio** syntax element, replacing the **nnpfc_required_energy_ratio** syntax element. Except the change of name, the syntax of Tables 4b and 6b remain unchanged.

In such embodiment, the **nnpfc_energy_ratio** syntax element may be coded as an 8-bit value and the range 0 to 255 should express positive as well as negative values as following: values below 128 should be considered as negative while the values above 128 should be considered as positive. A value equal to 0 corresponds to a lost of energy equal to a maximal loss value (e.g, -30%) and a value equal to 255 corresponds to a gain of energy equal to a maximal gain value (e.g., +30%).

In a variant embodiment, the **nnpfc_energy_ratio** syntax element is selected among a pre-determined set of percentage values that comprises both positive and negative values.

The variants described in the context of the first embodiment also apply for the second embodiment. For example, a specific syntax element may be defined for each mode.

In a variant embodiment, a Boolean flag is added to express a sign, for example identified as **nnpfc energy_ratio sign flag** syntax element that, when false (e.g. equal to 0), indicates a gain (i.e., a positive value) and when true (e.g. equal to 1) indicates a loss (i.e., a negative value). In this case, the **nnpfc_energy_ratio** syntax element represents only positive values.

The Table 7b illustrates such an example.

Table 7b

| nn_post_filter_characteristics( payloadSize ) { | Descriptor |
|---|---|
| nnpfc_purpose | u(16) |
| nnpfc_id | ue(v) |
| nnpfc_base_flag | u(1) |
| nnpfc_mode_idc | ue(v) |
| if(( nnpfc_mode_idc = = 1 **or (nnpfc_mode_idc = = 3)** ) { | |
| while( !byte_aligned( ) ) | |
| nnpfc_alignment_zero_bit_a | u(1) |
| nnpfc_tag_uri | st(v) |
| nnpfc_uri | st(v) |
| } | |
| nnpfc_property_present flag | u(1) |
| if( nnpfc_property_present_flag ) { | |
| /* input and output formatting */ | |
| nnpfc_num_input_pics_minus1 | ue(v) |
| if( nnpfc num input_pics minus1 > 0) { | |
| for( i = 0; i <= nnpfc_num_input_pics_minus1; i++) | |
| nnpfc_input_pic_filtering_flag[ i ] | u(1) |

(continued)

| | |
|---|---|
| nnpfc_absent_input_pic_zero_flag | u(1) |
| } | |
| **if**( ChromaUpsamplingFlag ) | |
| nnpfc_out_sub_c_flag | u(1) |
| if( ColourizationFlag ) | |
| nnpfc_out_colour_format_idc | u(2) |
| if( ResolutionResamplingFlag ) { | |
| nnpfc_pic_width_num_minus1 | ue(v) |
| nnpfc_pic_width_denom_minus1 | ue(v) |
| nnpfc_pic_height_num_minus1 | ue(v) |
| nnpfc_pic_height_denom_minus1 | ue(v) |
| } | |
| if( PictureRateUpsamplingFlag ) | |
| for( i = 0; i < nnpfc_num_input_pics_minus1; i++ ) | |
| nnpfc_interpolated_pics[ i ] | ue(v) |
| if( TemporalExtrapolationFlag ) | |
| nnpfc_extrapolated_pics_minus1 | ue(v) |
| if( SpatialExtrapolationFlag ) { | |
| nnpfc_spatial_extrapolation_left_offset | ue(v) |
| nnpfc_spatial_extrapolation_right_offset | ue(v) |
| nnpfc_spatial_extrapolation_top_offset | ue(v) |
| nnpfc_spatial_extrapolation_bottom_offset | ue(v) |
| } | |
| nnpfc_component_last_flag | u(1) |
| nnpfc_inp_format_idc | ue(v) |
| nnpfc_auxiliary_inp_idc | ue(v) |
| nnpfc_inp_order_idc | ue(v) |
| if( nnpfc_inp_format_idc = = 1) { | |
| if( nnpfc_inp_order_idc != 1) | |
| nnpfc_inp_tensor_luma_bitdepth_minus8 | ue(v) |
| if( nnpfc_inp_order_idc > 0) | |
| nnpfc_inp_tensor_chroma_bitdepth_minus8 | ue(v) |
| } | |
| nnpfc_out_format_idc | ue(v) |
| nnpfc_out_order_idc | ue(v) |
| if( nnpfc_out_format_idc = = 1) { | |
| if( nnpfc_out_order_idc != 1) | |
| nnpfc_out_tensor_luma_bitdepth_minus8 | ue(v) |
| if( nnpfc_out_order_idc != 0) | |
| nnpfc_out_tensor_chroma_bitdepth_minus8 | ue(v) |

(continued)

| | |
|---|---|
| } | |
| nnpfc_separate_colour_description_present_flag | u(1) |
| if( nnpfc_separate_colour_description_present_flag ) { | |
| nnpfc colour_primaries | u(8) |
| nnpfc_transfer_characteristics | u(8) |
| if( nnpfc_out_format_idc == 1) { | |
| nnpfc_matrix_coeffs | u(8) |
| nnpfc_full_range flag | u(1) |
| } | |
| } | |
| if( nnpfc_out_order_idc > 0) | |
| nnpfc_chroma_loc_info_present_flag | u(1) |
| if( nnpfc_chroma_loc_info_present_flag ) | |
| nnpfc_chroma_sample_loc_type_frame | ue(v) |
| nnpfc_overlap | ue(v) |
| nnpfc_constant_patch_size_flag | u(1) |
| if( nnpfc_constant_patch_size_flag ) { | |
| nnpfc_patch_width_minus1 | ue(v) |
| nnpfc_patch_height_minus1 | ue(v) |
| } else { | |
| nnpfc_extended_patch_width_cd_delta_minus1 | ue(v) |
| nnpfc_extended_patch_height_cd_delta_minus1 | ue(v) |
| } | |
| nnpfc_padding_type | ue(v) |
| if( nnpfc_padding_type == 4) { | |
| if( nnpfc_inp_order_idc != 1) | |
| nnpfc_luma_padding_val | ue(v) |
| if( nnpfc_inp_order_idc != 0) { | |
| nnpfc_cb_padding_val | ue(v) |
| nnpfc cr_padding val | ue(v) |
| } | |
| } | |
| nnpfc_complexity_info_present_flag | u(1) |
| if( nnpfc_complexity_info_present_flag ) { | |
| nnpfc_parameter_type_idc | u(2) |
| if( nnpfc_parameter_type_idc != 2) | |
| nnpfc_log2_parameter_bit_length_minus3 | u(2) |
| nnpfc_num_parameters_idc | u(6) |
| nnpfc_num_kmac_operations_idc | ue(v) |
| nnpfc_total_kilobyte_size | ue(v) |

(continued)

| | |
|---|---|
| } | |
| } | |
| nnpfc_num_metadata_extension_bits | ue(v) |
| if( nnpfc_num_metadata_extension_bits > 0) { | |
| if( nnpfc_purpose = = 0) { | |
| nnpfc_application_purpose tag_uri_present flag | u(1) |
| if( nnpfc_application_purpose_tag_uri_present_flag ) | |
| nnpfc_application_purpose tag_uri | st(v) |
| } | |
| if( SpatialExtrapolationFlag ) | |
| nnpfc_scan_type_idc | u(2) |
| nnpfc_reserved_metadata_extension | u(v) |
| } | |
| } | |
| /* ISO/IEC 15938-17 bitstream */ | |
| if(( nnpfc_mode_idc = = 0 ) **or (nnpfc_mode_idc = = 2))**{ | |
| while( !byte_aligned( ) ) | |
| nnpfc_alignment_zero_bit_b | u(1) |
| for( i = 0; more_data_in_payload( ); i++ ) | |
| nnpfc_payload_byte[ i ] | b(8) |
| } | |
| **if (nnpfc_mode_idc == 2) or (nnpdf_mode_idc == 3){** | |
| **nnpfc_energy_ratio_sgn_flag** | **u(1)** |
| **nnpfc_energy_ratio** | **u(8)** |
| **}** | |
| } | |

In the third embodiment, the **nnpfc_energy_ratio** syntax element specifies the absolute balance in terms of energy, considering both the energy consumed by the processor to apply the NNPF and the energy saved or lost while using the content consequently to the application of the NNPF. The example syntax of table 7b also applies to the third embodiment. In this example embodiment, the **nnpfc_energy_ratio** syntax element is for example coded using an 8-bit value. The different coding types described above with respect to the first and second embodiments (e.g., pre-determined set of percentage values, value ranging from 0 to 100) may also apply to this third embodiment.

Similar to first and second embodiments, the **nnpfc_energy_ratio** syntax element may be present in the NNPF mode metadata or individual syntax elements may be defined for each purpose, using the same syntax as illustrated in Table 7b. All the variants described above with reference to the first and second embodiments may apply to this third embodiment.

In a variant, a syntax element (e.g., a flag named **nnpfc energy_info_present flag**) may be used (e.g., included in one or more of the SEI messages described herein) to indicate whether information related to energy information of the NNPF (e.g., energy that may be used by applying the NNPF, an energy cost or saving that may incur as a consequence of having applied the NNPF, a (e.g., total) energy balance of applying the NNPF and using its output) may be signaled (e.g., present in the corresponding SEI message). This syntax element (and the corresponding NNPF energy information) may be provided in any section of an SEI message, such as, for example, inside or outside the section triggered by a syntax element **nnpfc complexity_info_present flag,** inside or outside the section triggered by a syntax element **nnpfc_property_present flag,** and/or the like. When the syntax element is set to a certain value (e.g., the nnpfc energy_info_present flag is set to 1), it may indicate that one or more other syntax elements related to energy information of the NNPF (e.g., the amount of energy required to run the NNPF and/or the amount of energy that may be gained or lost (e.g., a net energy gain or a net energy loss) from using content generated or modified by the NNPF, and/or the total balance of the application of the NNPF and the further use of its output) may be present (e.g., in an SEI message). When the syntax element is set to another value (e.g., the nnpfc energy_info_present flag is set to 0), it may indicate that no other syntax elements related to energy information of the NNPF (e.g., the amount of energy required to run the NNPF and/or the amount of energy that may be gained or lost (e.g., a net energy gain or a net energy loss) from using content generated or modified by the NNPF, and/or the total balance of the application of the NNPF and the further use of its output) are present (e.g., in the SEI message).

In examples, the NNPF energy related information that may be controlled by the aforementioned syntax element (e.g., nnpfc energy_info_present flag) may include first information indicative of energy used to apply the NNPF and/or second information indicative of the energy saving (or energy cost) that may result from (e.g., incurred as a consequence of) applying the NNPF. In examples, the first information may include the **nnpfc_required_energy_ratio** syntax element described herein, and the second information may include the **nnpfc _energy_ratio** syntax element described herein. Such first and/or second information may allow a device to make a choice on whether to apply the NNPF (e.g., apply the NNPF if there is a net energy gain from the application, and not apply the NNPF if there is a net energy loss from the application). In examples, the nnpfc energy_info_present flag syntax element may control any combination of energy information as described in the above embodiments.

Table 15b below illustrates example syntax comprising the aforementioned nnpfc energy_info_present flag.

Table 15b

| nn_post_filter_characteristics( payloadSize ) { | Descriptor |
|---|---|
| nnpfc_purpose | u(16) |
| nnpfc_id | ue(v) |
| nnpfc_base_flag | u(1) |
| nnpfc_mode_idc | ue(v) |
| If(( nnpfc_mode_idc = = 1 ) **or** ( **nnpfc_mode_idc = = 3 ))** { | |
| while( !byte_aligned( ) ) | |
| nnpfc_alignment_zero_bit_a | u(1) |
| nnpfc_tag_uri | st(v) |
| nnpfc_uri | st(v) |
| } | |
| nnpfc_property_present_flag | u(1) |
| if( nnpfc_property_present_flag ) { | |
| /* input and output formatting */ | |
| nnpfc_num_input_pics_minus1 | ue(v) |
| if( nnpfc_num_input_pics_minus1 > 0) { | |
| for( i = 0; i <= nnpfc_num_input_pics_minus1; i++) | |
| nnpfc_input_pic_filtering_flag[ i ] | u(1) |
| nnpfc_absent_input_pic_zero_flag | u(1) |
| } | |
| if( ChromaUpsamplingFlag ) | |
| nnpfc_out_sub_c_flag | u(1) |
| if( ColourizationFlag ) | |
| nnpfc out colour format_idc | u(2) |
| if( ResolutionResamplingFlag ) { | |
| nnpfc_pic_width_num_minus1 | ue(v) |
| nnpfc_pic_width_denom_minus1 | ue(v) |

(continued)

| | |
|---|---|
| nnpfc_pic_height_num_minus1 | ue(v) |
| nnpfc_pic_height_denom_minus1 | ue(v) |
| } | |
| if( PictureRateUpsamplingFlag ) | |
| for( i = 0; i < nnpfc_num_input_pics minus1; i++ ) | |
| nnpfc_interpolated_pics[ i ] | ue(v) |
| if( TemporalExtrapolationFlag ) | |
| nnpfc extrapolated_pics_minus1 | ue(v) |
| if( SpatialExtrapolationFlag ) { | |
| nnpfc_spatial_extrapolation_left_offset | ue(v) |
| nnpfc_spatial_extrapolation_right_offset | ue(v) |
| nnpfc_spatial_extrapolation_top_offset | ue(v) |
| nnpfc_spatial_extrapolation_bottom_offset | ue(v) |
| } | |
| nnpfc_component_last_flag | u(1) |
| nnpfc_inp_format_idc | ue(v) |
| nnpfc_auxiliary_inp_idc | ue(v) |
| nnpfc_inp_order_idc | ue(v) |
| if( nnpfc_inp_format_idc = = 1) { | |
| if( nnpfc_inp_order_idc != 1) | |
| nnpfc_inp_tensor_luma_bitdepth_minus8 | ue(v) |
| if( nnpfc_inp_order_idc > 0) | |
| nnpfc_inp_tensor_chroma_bitdepth_minus8 | ue(v) |
| } | |
| nnpfc_out_format_idc | ue(v) |
| nnpfc_out_order_idc | ue(v) |
| if( nnpfc_out_format_idc = = 1) { | |
| if( nnpfc_out_order_idc != 1) | |
| nnpfc_out_tensor_luma_bitdepth_minus8 | ue(v) |
| if( nnpfc_out_order_idc != 0) | |
| nnpfc_out_tensor_chroma_bitdepth_minus8 | ue(v) |
| } | |
| nnpfc_separate_colour_description_present_flag | u(1) |
| if( nnpfc_separate_colour_description_present_flag ) { | |
| nnpfc_colour_primaries | u(8) |
| nnpfc_transfer_characteristics | u(8) |
| if( nnpfc_out_format_idc = = 1) { | |
| nnpfc_matrix_coeffs | u(8) |
| nnpfc_full_range_flag | u(1) |
| } | |

(continued)

| | |
|---|---|
| } | |
| if( nnpfc_out_order_idc > 0) | |
|    nnpfc_chroma_loc_info_present_flag | u(1) |
| if( nnpfc_chroma_loc_info_present_flag ) | |
|    nnpfc_chroma_sample_loc_type_frame | ue(v) |
| nnpfc_overlap | ue(v) |
| nnpfc_constant_patch_size_flag | u(1) |
| if( nnpfc_constant_patch_size_flag ) { | |
|    nnpfc_patch_width_minus1 | ue(v) |
|    nnpfc_patch_height_minus1 | ue(v) |
| } else { | |
|    nnpfc_extended_patch_width_cd_delta_minus1 | ue(v) |
|    nnpfc_extended_patch_height_cd_delta_minus1 | ue(v) |
| } | |
| nnpfc_padding_type | ue(v) |
| if( nnpfc_padding_type = = 4) { | |
|    if( nnpfc_inp_order_idc != 1) | |
|      nnpfc luma_padding val | ue(v) |
|    if( nnpf_ inp_order_idc != 0) { | |
|      nnpfc_cb_padding_val | ue(v) |
|      nnpfc cr_padding val | ue(v) |
|    } | |
| } | |
| nnpfc_complexity_info_present_flag | u(1) |
| if( nnpfc_complexity_info_present_flag ) { | |
|    nnpfc_parameter type_idc | u(2) |
|    if( nnpfc_parameter_type_idc != 2) | |
|      nnpfc_log2_parameter_bit_length_minus3 | u(2) |
|    nnpfc_num_parameters_idc | u(6) |
|    nnpfc_num_kmac_operations_idc | ue(v) |
|    nnpfc_total_kilobyte_size | ue(v) |
| } | |
| nnpfc_num_metadata_extension_bits | ue(v) |
| if( nnpfc_num_metadata_extension_bits > 0) { | |
|    if( nnpfc_purpose = = 0) { | |
|      nnpfc_application_purpose tag_uri_present_flag | u(1) |
|      if( nnpfc_application_purpose_tag_uri_present_flag ) | |
|        nnpfc_application_purpose_tag_uri | st(v) |
|    } | |
|    if( SpatialExtrapolationFlag ) | |

(continued)

| | |
|---|---|
| nnpfc_scan_type_idc | u(2) |
| nnpfc_reserved_metadata_extension | u(v) |
| } | |
| } | |
| /* ISO/IEC 15938-17 bitstream */ | |
| If(( nnpfc_mode_idc = = 0) **or ( nnpfc_mode_idc = = 2 ))** { | |
| while( !byte_aligned( ) ) | |
| nnpfc alignment zero bit_b | u(1) |
| for( i = 0; more_data_in_payload( ); i++ ) | |
| nnpfc_payload_byte[ i ] | b(8) |
| } | |
| **if (nnpfc_mode_idc == 2) or (nnpdf_mode_idc == 3){** | |
| **if (nnpfc_energy_info_present_flag) {** | |
| **nnpfc_required energy_ratio** | u(8) |
| **nnpfc_energy_ratio_sgn_flag** | u(1) |
| **nnpfc_energy_ratio** | **u(8)** |
| **}** | |
| **}** | |
| } | |

Table 4c illustrates the first embodiment where an energy parameter related to a neural network post-processing filter indicating the increase of energy amount needed to run a selected neural network post filter is added to the complexity information of the neural network post filter characteristics SEI message. This parameter is identified by the **nnpfc_required_energy_ratio** syntax element and carried within the section triggered by the **nnpfc_complexity_info_present_flag.** It is highlighted by a bold font in table 4c and can take different forms. In the example embodiment of table 4c, it is coded using an 8 bit value.

Table 8c

| nn_post_filter_characteristics( payloadSize ) { | Descriptor |
|---|---|
| nnpfc_purpose | u(16) |
| nnpfc_id | ue(v) |
| nnpfc_base_flag | u(1) |
| nnpfc_mode_idc | ue(v) |
| if( nnpfc_mode_idc = = 1) { | |
| while( !byte_aligned( ) ) | |
| nnpfc_alignment_zero_bit_a | u(1) |
| nnpfc_tag_uri | st(v) |
| nnpfc_uri | st(v) |
| } | |
| nnpfc_property_present_flag | u(1) |
| if( nnpfc_property_present_flag ) { | |
| /* input and output formatting */ | |

(continued)

| | |
|---|---|
| nnpfc_num_input_pics_minus1 | ue(v) |
| if( nnpfc_num_input_pics_minus1 > 0) { | |
| for( i = 0; i <= nnpfc_num_input_pics_minus1; i++) | |
| nnpfc_input_pic_filtering_flag[ i ] | u(1) |
| nnpfc_absent_input_pic_zero_flag | u(1) |
| } | |
| if( ChromaUpsamplingFlag ) | |
| nnpfc_out_sub_c_flag | u(1) |
| if( ColourizationFlag ) | |
| nnpfc_out_colour_format_idc | u(2) |
| if( ResolutionResamplingFlag ) { | |
| nnpfc_pic_width_num_minus1 | ue(v) |
| nnpfc_pic_width_denom_minus1 | ue(v) |
| nnpfc_pic_height_num_minus1 | ue(v) |
| nnpfc_pic_height_denom_minus1 | ue(v) |
| } | |
| if( PictureRateUpsamplingFlag ) | |
| for( i = 0; i < nnpfc_num_input_pics_minus1; i++ ) | |
| nnpfc_interpolated_pics[ i ] | ue(v) |
| if( TemporalExtrapolationFlag ) | |
| nnpfc_extrapolated_pics_minus1 | ue(v) |
| if( SpatialExtrapolationFlag ) { | |
| nnpfc_spatial_extrapolation_left offset | ue(v) |
| nnpfc_spatial_extrapolation_right_offset | ue(v) |
| nnpfc_spatial_extrapolation_top_offset | ue(v) |
| nnpfc_spatial_extrapolation_bottom_offset | ue(v) |
| } | |
| nnpfc_component_last_flag | u(1) |
| nnpfc_inp_format_idc | ue(v) |
| nnpfc_auxiliary_inp_idc | ue(v) |
| nnpfc_inp_order_idc | ue(v) |
| if( nnpfc_inp_format_idc = = 1) { | |
| if( nnpfc_inp_order_idc != 1) | |
| nnpfc_inp_tensor_luma_bitdepth_minus8 | ue(v) |
| if( nnpfc_inp_order_idc > 0) | |
| nnpfc_inp_tensor_chroma_bitdepth_minus8 | ue(v) |
| } | |
| nnpfc_out_format_idc | ue(v) |
| nnpfc_out_order_idc | ue(v) |
| if( nnpfc_out_format_idc = = 1) { | |

(continued)

| | |
|---|---|
| if( nnpfc_out_order_idc != 1) | |
|     nnpfc_out_tensor_luma_bitdepth_minus8 | ue(v) |
| if( nnpfc_out_order_idc != 0) | |
|     nnpfc_out_tensor_chroma_bitdepth_minus8 | ue(v) |
| } | |
| nnpfc_separate_colour_description_present_flag | u(1) |
| if( nnpfc_separate_colour_description_present_flag ) { | |
|     nnpfc_colour_primaries | u(8) |
|     nnpfc_transfer_characteristics | u(8) |
|     if( nnpfc_out_format_idc = = 1) { | |
|         nnpfc_matrix_coeffs | u(8) |
|         nnpfc_full_range_flag | u(1) |
|     } | |
| } | |
| if( nnpfc_out_order_idc > 0) | |
|     nnpfc_chroma_loc_info_present_flag | u(1) |
| if( nnpfc_chroma_loc_info_present_flag ) | |
|     nnpfc_chroma_sample_loc_type_frame | ue(v) |
| nnpfc_overlap | ue(v) |
| nnpfc_constant_patch_size_flag | u(1) |
| if( nnpfc_constant_patch_size_flag ) { | |
|     nnpfc_patch_width_minus1 | ue(v) |
|     nnpfc_patch_height_minus1 | ue(v) |
| } else { | |
|     nnpfc_extended_patch_width_cd_delta_minus1 | ue(v) |
|     nnpfc_extended_patch_height_cd_delta_minus1 | ue(v) |
| } | |
| nnpfc_padding_type | ue(v) |
| if( nnpfc_padding_type = = 4) { | |
|     if( nnpfc inp order_idc != 1) | |
|         nnpfc_luma_padding_val | ue(v) |
|     if( nnpfc_inp_order_idc != 0) { | |
|         nnpfc_cb_padding_val | ue(v) |
|         nnpfc cr_padding val | ue(v) |
|     } | |
| } | |
| nnpfc_complexity_info_present_flag | u(1) |
| if( nnpfc_complexity_info_present_flag ) { | |
|     nnpfc_parameter_type_idc | u(2) |
|     if( nnpfc_parameter_type_idc != 2) | |

(continued)

| | |
|---|---|
| nnpfc_log2_parameter_bit_length_minus3 | u(2) |
| nnpfc_num_parameters_idc | u(6) |
| nnpfc_num_kmac_operations_idc | ue(v) |
| nnpfc_total_kilobyte_size | ue(v) |
| **nnpfc_required_energy_ratio** | **u(8)** |
| } | |
| nnpfc_num_metadata_extension_bits | ue(v) |
| if( nnpfc_num_metadata_extension_bits > 0) { | |
| if( nnpfc_purpose = = 0) { | |
| nnpfc_application_purpose tag_uri_present_flag | u(1) |
| if( nnpfc_application_purpose_tag_uri_present_flag ) | |
| nnpfc_application_purpose_tag_uri | st(v) |
| } | |
| if( SpatialExtrapolationFlag ) | |
| nnpfc_scan_type_idc | u(2) |
| nnpfc_reserved_metadata_extension | u(v) |
| } | |
| } | |
| /* ISO/IEC 15938-17 bitstream */ | |
| if( nnpfc_mode_idc = = 0) { | |
| while( !byte_aligned( ) ) | |
| nnpfc_alignment_zero_bit_b | u(1) |
| for( i = 0; more_data_in_payload( ); i++ ) | |
| nnpfc_payload_byte[ i ] | b(8) |
| } | |
| } | |

The value of the **nnpfc_required_energy_ratio** syntax element specifies the increase amount of energy required to apply the post-filter. This value may be an absolute energy value. It may also be computed with reference to the overall amount of energy required by the tool in charge of running the NNPF (e.g., the decoder), thus allowing to compare one or more NNPF to the overall decoding functions. It may also be compared with reference to a bigger system such as the device itself.

In at least one variant of the first embodiment, the **nnpfc_required_energy_ratio** syntax element is coded over 2 bits to select among a pre-determined set of percentage values, as illustrated in Table 5c. In such embodiment, for example, **nnpfc_required_energy_ratio** equals to 2 represents an energy reduction rate of 20%.

Table 5c

| nnpfc_required_energy_ratio | Interpretation |
|---|---|
| 0 | The required energy ratio is 5% |
| 1 | The required energy ratio is 10% |
| 2 | The required energy ratio is 20% |
| 3 | The required energy ratio is 30% |

In at least one variant of the first embodiment, the value of the **nnpfc_required_energy_ratio** syntax element is expressed as a percentage of energy, when compared to the energy needed without the post filter. Its value is between 0 and 100 and may be coded over 7 bits. It may also be coded as a float value to allow for decimal values of percentage.

In at least one variant of the first embodiment, the value of the **nnpfc_required_energy_ratio** syntax element is expressed as a percentage of energy, when compared to the energy needed without the post filter and coded using an 8-bit value as follows:

$$\left\lfloor \frac{100}{2^8 - 1} \times \textbf{nnpfc\_required\_energy\_ratio} \right\rfloor$$

In at least one variant of the above embodiment, the range of acceptable percentage of energy needed by NNPFs can be a priori restricted. For example it could be restricted to the range [0%, 10%] or to the range [0%, 30%] or to any other range. In this case, the value of **nnpfc_required_energy_ratio** can still be coded over 7 bits, with a normalization by 10 (in the first example of range) to retrieve the actual percentages. Another range of percentage values can be envisioned with a corresponding normalization from the coded values in the **nnpfc_required_energy_ratio.**

In a variant, the value of the **nnpfc_required_energy_ratio** and the **nnpfc_energy_ratio** syntax elements are expressed as a corresponding or equivalent number of multiplication-accumulation (MAC) operations (e.g., a number of MACs that may represent the same energy consumption).

In a variant, the energy may be indicated in another unit that corresponds to different energy levels (e.g., low level, middle level, or high level), which may depend on device characteristics on which the post processing filters may be run.

Table 5c illustrates a variant of the first embodiment where an energy parameter related to a neural network post-processing filter indicating the increase of energy amount needed to run a selected neural network post filter is added for each mode (**nnpfc_purpose** syntax element). As introduced above in relation with Table 3, the **nnpfc_purpose** flag corresponds to a list of 8 modes (and their corresponding flags) describing the different tasks that the neural network may implement. In embodiments, each of these tasks may be deactivated independently and the choice of deactivating one or more tasks may be based on some energy consumption criterion. For this reason, the syntax is modified to provide one specific energy flag per mode (i.e., per purpose flag) in the NNPFC syntax.

This parameter is identified respectively by the **nnpfc_required energy_ratio_for_chroma_upsampling, npfc_required energy_ratio_for colourization, nnpfc_required energy_ratio_for_resolution_upsampling, nnpfc_required energy_ratio_for_picture_rate_upsampling, nnpfc_required energy_ratio_for_temporal_extrapolation,** and **nnpfc_required energy_ratio_for_spatial_extrapolation** syntax elements carried within the section related to the complexity information and triggered by individual purpose flags related to the corresponding modes. These elements are highlighted by a bold font in table 6c and can take different forms. In the example embodiment of table 6c, the elements are for example coded using an 8-bit value. The different coding types described above (e.g., pre-determined set of percentage values, value ranging from 0 to 100) may also apply to this variant.

Table 6c

| nn_post_filter_characteristics( payloadSize ) { | Descriptor |
|---|---|
| nnpfc_purpose | u(16) |
| nnpfc_id | ue(v) |
| nnpfc_base_flag | u(1) |
| nnpfc_mode_idc | ue(v) |
| if( nnpfc_mode_idc = = 1) { | |
|    while( !byte_aligned( ) ) | |
|      nnpfc_alignment_zero_bit_a | u(1) |
|    nnpfc_tag_uri | st(v) |
|    nnpfc_uri | st(v) |
| } | |
| nnpfc_property_present flag | u(1) |
| if( nnpfc_property_present flag ) { | |
|    /* input and output formatting */ | |

(continued)

| | |
|---|---|
| nnpfc_num_input_pics_minus1 | ue(v) |
| if( nnpfc_num_input_pics_minus1 > 0) { | |
| for( i = 0; i <= nnpfc_num_input_pics_minus1; i++ ) | |
| nnpfc_input_pic_filtering_flag[ i ] | u(1) |
| nnpfc_absent_input_pic_zero_flag | u(1) |
| } | |
| if( ChromaUpsamplingFlag ) | |
| nnpfc_out_sub_c_flag | u(1) |
| if( ColourizationFlag ) | |
| nnpfc_out_colour_format_idc | u(2) |
| if( ResolutionResamplingFlag ) { | |
| nnpfc_pic_width_num_minus1 | ue(v) |
| nnpfc_pic_width_denom_minus1 | ue(v) |
| nnpfc_pic_height_num_minus1 | ue(v) |
| nnpfc_pic_height_denom_minus1 | ue(v) |
| } | |
| if( PictureRateUpsamplingFlag ) | |
| for( i = 0; i < nnpfc_num_input_pics_minus1; i++ ) | |
| nnpfc_interpolated_pics[ i ] | ue(v) |
| if( TemporalExtrapolationFlag ) | |
| nnpfc_extrapolated_pics_minus1 | ue(v) |
| if( SpatialExtrapolationFlag ) { | |
| nnpfc_spatial_extrapolation_left_offset | ue(v) |
| nnpfc_spatial_extrapolation_right_offset | ue(v) |
| nnpfc_spatial_extrapolation_top_offset | ue(v) |
| nnpfc_spatial_extrapolation_bottom_offset | ue(v) |
| } | |
| nnpfc_component_last_flag | u(1) |
| nnpfc_inp_format_idc | ue(v) |
| nnpfc_auxiliary_inp_idc | ue(v) |
| nnpfc_inp_order_idc | ue(v) |
| if( nnpfc_inp_format_idc = = 1) { | |
| if( nnpfc_inp_order_idc != 1) | |
| nnpfc_inp_ensor_luma_bitdepth_minus8 | ue(v) |
| if( nnpfc_inp_order_idc > 0) | |
| nnpfc_inp_tensor_chroma_bitdepth_minus8 | ue(v) |
| } | |
| nnpfc_out_format_idc | ue(v) |
| nnpfc_out_order_idc | ue(v) |
| if( nnpfc_out_format_idc = = 1) { | |

(continued)

| | |
|---|---|
| if( nnpfc_out_order_idc != 1) | |
| nnpfc_out_tensor_luma_bitdepth_minus8 | ue(v) |
| if( nnpfc_out_order_idc != 0) | |
| nnpfc_out_tensor_chroma_bitdepth_minus8 | ue(v) |
| } | |
| nnpfc_separate_colour_description_present_flag | u(1) |
| if( nnpfc_separate_colour_description_present_flag ) { | |
| nnpfc_colour_primaries | u(8) |
| nnpfc_transfer_characteristics | u(8) |
| if( nnpfc_out_format_idc = = 1) { | |
| nnpfc_matrix_coeffs | u(8) |
| nnpfc_full_range_flag | u(1) |
| } | |
| } | |
| if( nnpfc_out_order_idc > 0) | |
| nnpfc_chroma_loc_info_present_flag | u(1) |
| if( nnpfc_chroma_loc_info_present_flag ) | |
| nnpfc_chroma_sample_loc_type_frame | ue(v) |
| nnpfc_overlap | ue(v) |
| nnpfc_constant_patch_size_flag | u(1) |
| if( nnpfc_constant_patch_size_flag ) { | |
| nnpfc_patch_width_minus1 | ue(v) |
| nnpfc_patch_height_minus1 | ue(v) |
| } else { | |
| nnpfc_extended_patch width_cd_delta_minus1 | ue(v) |
| nnpfc_extended_patch_height_cd delta_minus1 | ue(v) |
| } | |
| nnpfc_padding_type | ue(v) |
| if( nnpfc_padding_type = = 4) { | |
| if( nnpfc_inp_order_idc != 1) | |
| nnpfc_luma_padding_val | ue(v) |
| if( nnpfc_inp_order_idc != 0) { | |
| nnpfc_cb_padding_val | ue(v) |
| nnpfc_cr_padding_val | ue(v) |
| } | |
| } | |
| nnpfc_complexity_info_present_flag | u(1) |
| if( nnpfc_complexity_info_present_flag ) { | |
| nnpfc_parameter_type_idc | u(2) |
| if( nnpfc_parameter_type_idc != 2) | |

(continued)

| | |
|---|---|
| nnpfc_log2_parameter_bit_length_minus3 | u(2) |
| nnpfc_num_parameters_idc | u(6) |
| nnpfc_num_kmac_operations_idc | ue(v) |
| nnpfc_total_kilobyte_size | ue(v) |
| **if( ChromaUpsamplingFlag )** | |
| **nnpfc_required_energy_ratio_for_chroma_upsampling** | **u(8)** |
| **if(ColourizationFlag)** | |
| **nnpfc_required_energy_ratio_for_colourization** | **u(8)** |
| **if(ResolutionResamplingFlag)** | |
| **nnpfc_required_energy_ratio_for_resolution_upsampling** | **u(8)** |
| **if(PictureRateUpsamplingFlag)** | |
| **nnpfc_required_energy_ratio_for_picture_rate_upsampling** | **u(8)** |
| **if(TemporalExtrapolationFlag)** | |
| **nnpfc_required_energy_ratio_for_temporal_extrapolation** | **u(8)** |
| **if(SpatialExtrapolationFlag)** | |
| **nnpfc_required_energy_ratio_for_spatial_extrapolation** | **u(8)** |
| **}** | |
| nnpfc_num_metadata_extension_bits | ue(v) |
| if( nnpfc_num_metadata_extension_bits > 0 ) { | |
| if( nnpfc_purpose = = 0 ) { | |
| nnpfc_application_purpose tag_uri_present flag | u(1) |
| if( nnpfc_application_purpose_tag_uri_present_flag ) | |
| nnpfc application_purpose tag_uri | st(v) |
| } | |
| if( SpatialExtrapolationFlag ) | |
| nnpfc_scan_type_idc | u(2) |
| nnpfc_reserved_metadata_extension | u(v) |
| } | |
| } | |
| /* ISO/IEC 15938-17 bitstream */ | |
| if( nnpfc_mode_idc = = 0 ) { | |
| while( !byte_aligned( ) ) | |
| nnpfc_alignment_zero_bit_b | u(1) |
| for( i = 0; more_data_in_payload( ); i++ ) | |
| nnpfc_payload_byte[ i ] | b(8) |
| } | |
| } | |

In the second embodiment, the energy characteristics carried by the NNPFC SEI message specifies the amount of energy that may be either gained or lost by using the content after the application of the NNPF, in other words, as a consequence of using the NNPF. For example, if the NNPF has for purpose to spatially extrapolate the content, and if other NNPFs are applied after this NNPF, the modification of the content will result in an increase content resolution and thus, might most probably result in an increase consumption of the subsequent NNPFs. Indeed, neural networks' complexity and therefore energy are often related to the input content resolution. Other types of NNPF may result in decreasing the energy consumption.

This energy characteristic does not include the energy needed to apply the NNPF itself.

The amount of energy is carried by a **nnpfc_energy_ratio** syntax element, replacing the **nnpfc_required_energy_ratio** syntax element. Except the change of name, the syntax of Tables 4c and 6c remain unchanged.

In such embodiment, the **nnpfc_energy_ratio** syntax element may be coded as an 8-bit value and the range 0 to 255 should express positive as well as negative values as following: values below 128 should be considered as negative while the values above 128 should be considered as positive. A value equal to 0 corresponds to a lost of energy equal to a maximal loss value (e.g, -30%) and a value equal to 255 corresponds to a gain of energy equal to a maximal gain value (e.g., +30%).

In a variant embodiment, the **nnpfc_energy_ratio** syntax element is selected among a pre-determined set of percentage values that comprises both positive and negative values.

The variants described in the context of the first embodiment also apply for the second embodiment. For example, a specific syntax element may be defined for each mode.

In a variant embodiment, a Boolean flag is added to express a sign, for example identified as **nnpfc energy_ratio sign flag** syntax element that, when false (e.g. equal to 0), indicates a gain (i.e. a positive value) and when true (e.g. equal to 1) indicates a loss (i.e. a negative value). In this case, the **nnpfc_energy_ratio** syntax element represents only positive values.

Table 7c illustrates such example.

Table 7c

| nn_post_filter_characteristics( payloadSize ) { | Descriptor |
|---|---|
| nnpfc_purpose | u(16) |
| nnpfc_id | ue(v) |
| nnpfc_base_flag | u(1) |
| nnpfc_mode_idc | ue(v) |
| if( nnpfc_mode_idc = = 1) { | |
| while( !byte_aligned( ) ) | |
| nnpfc_alignment_zero_bit_a | u(1) |
| nnpfc_tag_uri | st(v) |
| nnpfc_uri | st(v) |
| } | |
| nnpfc_property_present_flag | u(1) |
| if( nnpfc_property_present flag ) { | |
| /* input and output formatting */ | |
| nnpfc_num_input_pics_minus1 | ue(v) |
| if( nnpfc_num_input_pics_minus1 > 0) { | |
| for( i = 0; i <= nnpfc_num_input_pics_minus1; i++) | |
| nnpfc_input_pic_filtering_flag[ i ] | u(1) |
| nnpfc_absent_input_pic_zero_flag | u(1) |
| } | |
| if( ChromaUpsamplingFlag ) | |
| nnpfc_out_sub_c_flag | u(1) |
| if( ColourizationFlag ) | |
| nnpfc out colour format_idc | u(2) |
| if( ResolutionResamplingFlag ) { | |

(continued)

| | |
|---|---|
| nnpfc_pic_width_num_minus1 | ue(v) |
| nnpfc_pic_width_denom_minus1 | ue(v) |
| nnpfc_pic_height_num_minus1 | ue(v) |
| nnpfc_pic_height_denom_minus1 | ue(v) |
| } | |
| if( PictureRateUpsamplingFlag ) | |
| for( i = 0; i < nnpfc_num_input_pics_minus1; i++ ) | |
| nnpfc_interpolated_pics[ i ] | ue(v) |
| if( TemporalExtrapolationFlag ) | |
| nnpfc_extrapolated_pics_minus1 | ue(v) |
| if( SpatialExtrapolationFlag ) { | |
| nnpfc spatial extrapolation_left offset | ue(v) |
| nnpfc_spatial_extrapolation_right_offset | ue(v) |
| nnpfc_spatial_extrapolation_top_offset | ue(v) |
| nnpfc_spatial_extrapolation_bottom_offset | ue(v) |
| } | |
| nnpfc_component_last_flag | u(1) |
| nnpfc_inp_format_idc | ue(v) |
| nnpfc_auxiliary_inp_idc | ue(v) |
| nnpfc_inp_order_idc | ue(v) |
| if( nnpfc_inp_format_idc = = 1 ) { | |
| if( nnpfc_inp_order_idc != 1) | |
| nnpfc_inp_tensor_luma_bitdepth_minus8 | ue(v) |
| if( nnpfc_inp_order_idc > 0) | |
| nnpfc_inp_tensor_chroma_bitdepth_minus8 | ue(v) |
| } | |
| nnpfc_out_format_idc | ue(v) |
| nnpfc_out_order_idc | ue(v) |
| if( nnpfc_out_format_idc = = 1 ) { | |
| if( nnpfc_out_order_idc != 1) | |
| nnpfc_out_tensor_luma_bitdepth_minus8 | ue(v) |
| if( nnpfc_out_order_idc != 0) | |
| nnpfc_out_tensor_chroma_bitdepth_minus8 | ue(v) |
| } | |
| nnpfc_separate_colour_description_present_flag | u(1) |
| if( nnpfc_separate_colour_description_present_flag ) { | |
| nnpfc_colour_primaries | u(8) |
| nnpfc_transfer_characteristics | u(8) |
| if( nnpfc_out_format_idc = = 1 ) { | |
| nnpfc_matrix_coeffs | u(8) |

(continued)

| | |
|---|---|
| nnpfc_full_range flag | u(1) |
| } | |
| } | |
| if( nnpfc_out_order_idc > 0) | |
| nnpfc_chroma_loc_info_present_flag | u(1) |
| if( nnpfc_chroma_loc_info_present_flag ) | |
| nnpfc_chroma_sample_loc_type_frame | ue(v) |
| nnpfc_overlap | ue(v) |
| nnpfc_constant_patch_size_flag | u(1) |
| if( nnpfc_constant_patch_size_flag ) { | |
| nnpfc_patch_width_minus1 | ue(v) |
| nnpfc_patch_height_minus1 | ue(v) |
| } else { | |
| nnpfc_extended_patch_width_cd_delta_minus1 | ue(v) |
| nnpfc_extended_patch_height_cd_delta_minus1 | ue(v) |
| } | |
| nnpfc_padding_type | ue(v) |
| if( nnpfc_padding_type = = 4) { | |
| if( nnpfc_inp_order_idc != 1) | |
| nnpfc_luma_padding_val | ue(v) |
| if( nnpfc_inp_order_idc != 0) { | |
| nnpfc_cb_padding_val | ue(v) |
| nnpfc_cr_padding_val | ue(v) |
| } | |
| } | |
| nnpfc_complexity_info_present_flag | u(1) |
| if( nnpfc_complexity_info_present_flag ) { | |
| nnpfc_parameter_type_idc | u(2) |
| if( nnpfc_parameter_type_idc != 2) | |
| nnpfc_log2_parameter_bit_length_minus3 | u(2) |
| nnpfc_num_parameters_idc | u(6) |
| nnpfc_num_kmac_operations_idc | ue(v) |
| nnpfc_total_kilobyte_size | ue(v) |
| nnpfc_energy_ratio_sign_flag | u(1) |
| nnpfc_energy_ratio | u(8) |
| } | |
| } | |
| nnpfc_num_metadata_extension_bits | ue(v) |
| if( nnpfc_num_metadata_extension_bits > 0) { | |
| if( nnpfc_purpose = = 0) { | |

(continued)

| | |
|---|---|
| nnpfc_application_purpose tag_uri_present_flag | u(1) |
| if( nnpfc_application_purpose_tag_uri_present_flag ) | |
| nnpfc_application_purpose tag_uri | st(v) |
| } | |
| if( SpatialExtrapolationFlag ) | |
| nnpfc_scan_type_idc | u(2) |
| nnpfc_reserved_metadata_extension | u(v) |
| } | |
| } | |
| /* ISO/IEC 15938-17 bitstream */ | |
| if( nnpfc_mode_idc = = 0) { | |
| while( !byte_aligned( ) ) | |
| nnpfc_alignment_zero_bit_b | u(1) |
| for( i = 0; more_data_in_payload( ); i++ ) | |
| nnpfc_payload_byte[ i ] | b(8) |
| } | |
| } | |

In the third embodiment, the **nnpfc_energy_ratio** syntax element specifies the absolute balance in terms of energy, considering both the energy consumed by the processor to apply the NNPF and the energy saved or lost while using the content consequently to the application of the NNPF. The example syntax of table 7c also applies to the third embodiment. In this example embodiment, the **nnpfc_energy_ratio** syntax element is for example coded using an 8-bit value. The different coding types described above with respect to the first and second embodiments (e.g., pre-determined set of percentage values, value ranging from 0 to 100) may also apply to this third embodiment.

Similar to first and second embodiments, the **nnpfc_energy_ratio** syntax element may be present in the complexity related information of the NNPF metadata or individual syntax elements may be defined for each purpose, using the same syntax as above. All the variants described above with reference to the first and second embodiments may apply to this third embodiment.

In a variant, a syntax element (e.g., a flag named **nnpfc_energy_info_present_flag)** may be used (e.g., included in one or more of the SEI messages described herein) to indicate whether information related to energy information of the NNPF (e.g., energy that may be used by applying the NNPF, an energy cost or saving that may incur as a consequence of having applied the NNPF, a (e.g., total) energy balance of applying the NNPF and using its output) may be signaled (e.g., present in the corresponding SEI message). This syntax element (and the corresponding NNPF energy information) may be provided in any section of an SEI message, such as, for example, inside or outside the section triggered by a syntax element **nnpfc_complexity_info_present flag,** inside or outside the section triggered by a syntax element **nnpfc_property_present_flag,** and/or the like. When the syntax element is set to a certain value (e.g., the nnpfc energy_info_present flag is set to 1), it may indicate that one or more other syntax elements related to energy information of the NNPF (e.g., the amount of energy required to run the NNPF and/or the amount of energy that may be gained or lost (e.g., a net energy gain or a net energy loss) from using content generated or modified by the NNPF, and/or the total balance of the application of the NNPF and the further use of its output) may be present (e.g., in an SEI message). When the syntax element is set to another value (e.g., the nnpfc energy_info_present flag is set to 0), it may indicate that no other syntax elements related to energy information of the NNPF (e.g., the amount of energy required to run the NNPF and/or the amount of energy that may be gained or lost (e.g., a net energy gain or a net energy loss) from using content generated or modified by the NNPF, and/or the total balance of the application of the NNPF and the further use of its output) are present (e.g., in the SEI message).

In examples, the NNPF energy related information that may be controlled by the aforementioned syntax element (e.g., nnpfc energy_info_present flag) may include first information indicative of energy used to apply the NNPF and/or second information indicative of the energy saving (or energy cost) that may result from (e.g., incurred as a consequence of) applying the NNPF. In examples, the first information may include the **nnpfc_required_energy_ratio** syntax element described herein, and the second information may include the **nnpfc_energy_ratio** syntax element described herein. Such first and/or second information may allow a device to make a choice on whether to apply the NNPF (e.g., apply the NNPF if there is a net energy gain from the application, and not apply the NNPF if there is a net energy loss from the application). In examples, the nnpfc energy_info_present flag syntax element may control any combination of energy information as described in the above embodiments.

Table 15c below illustrates example syntax comprising the aforementioned nnpfc_energy_info_present_flag.

Table 15c

| nn_post_filter_characteristics( payloadSize ) { | Descriptor |
|---|---|
| nnpfc_purpose | u(16) |
| nnpfc_id | ue(v) |
| nnpfc_base_flag | u(1) |
| nnpfc_mode_idc | ue(v) |
| if( nnpfc_mode_idc = = 1) { | |
| while( !byte_aligned( ) ) | |
| nnpfc_alignment_zero_bit_a | u(1) |
| nnpfc_tag_uri | st(v) |
| nnpfc_uri | st(v) |
| } | |
| nnpfc_property_present flag | u(1) |
| if( nnpfc_property_present_flag ) { | |
| /* input and output formatting */ | |
| nnpfc_num_input_pics_minus1 | ue(v) |
| if( nnpfc_num_input_pics_minus1 > 0) { | |
| for( i = 0; i <= nnpfc_num_input_pics_minus1; i++) | |
| nnpfc_input_pic_filtering_flag[ i ] | u(1) |
| nnpfc_absent_input_pic_zero_flag | u(1) |
| } | |
| if( ChromaUpsamplingFlag ) | |
| nnpfc_out_sub_c_flag | u(1) |
| if( ColourizationFlag ) | |
| nnpfc_out_colour_format_idc | u(2) |
| if( ResolutionResamplingFlag ) { | |
| nnpfc_pic_width_num_minus1 | ue(v) |
| nnpfc_pic_width_denom_minus1 | ue(v) |
| nnpfc_pic_height_num_minus1 | ue(v) |
| nnpfc_pic_height_denom_minus1 | ue(v) |
| } | |
| if( PictureRateUpsamplingFlag ) | |
| for( i = 0; i < nnpfc_num_input_pics_minus1; i++ ) | |
| nnpfc_interpolated_pics[ i ] | ue(v) |
| if( TemporalExtrapolationFlag ) | |
| nnpfc_extrapolated_pics_minus1 | ue(v) |

(continued)

| | |
|---|---|
| if( SpatialExtrapolationFlag ) { | |
| nnpfc spatial extrapolation_left offset | ue(v) |
| nnpfc_spatial_extrapolation_right_offset | ue(v) |
| nnpfc_spatial_extrapolation_top_offset | ue(v) |
| nnpfc_spatial_extrapolation_bottom_offset | ue(v) |
| } | |
| nnpfc_component_last_flag | u(1) |
| nnpfc_inp_format_idc | ue(v) |
| nnpfc_auxiliary_inp_idc | ue(v) |
| nnpfc_inp_order_idc | ue(v) |
| if( nnpfc_inp_format_idc = = 1) { | |
| if( nnpfc inp order_idc != 1) | |
| nnpfc_inp_tensor_luma_bitdepth_minus8 | ue(v) |
| if( nnpfc_inp_order_idc > 0) | |
| nnpfc_inp_tensor_chroma_bitdepth_minus8 | ue(v) |
| } | |
| nnpfc_out_format_idc | ue(v) |
| nnpfc_out_order_idc | ue(v) |
| if( nnpfc_out_format_idc = = 1) { | |
| if( nnpfc_out_order_idc != 1) | |
| nnpfc_out_tensor_luma_bitdepth_minus8 | ue(v) |
| if( nnpfc_out_order_idc != 0) | |
| nnpfc_out_tensor_chroma_bitdepth_minus8 | ue(v) |
| } | |
| nnpfc_separate_colour_description_present_flag | u(1) |
| if( nnpfc_separate_colour_description_present_flag ) { | |
| nnpfc_colour_primaries | u(8) |
| nnpfc_transfer_characteristics | u(8) |
| if( nnpfc_out_format_idc = = 1) { | |
| nnpfc_matrix_coeffs | u(8) |
| nnpfc full_range flag | u(1) |
| } | |
| } | |
| if( nnpfc_out_order_idc > 0) | |
| nnpfc_chroma_loc_info_present_flag | u(1) |
| if( nnpfc_chroma_loc_info_present_flag ) | |
| nnpfc_chroma_sample_loc_type_frame | ue(v) |
| nnpfc_overlap | ue(v) |
| nnpfc_constant_patch_size_flag | u(1) |
| if( nnpfc_constant_patch_size_flag ) { | |

(continued)

| | |
|---|---|
| nnpfc_patch_width_minus1 | ue(v) |
| nnpfc_patch_height_minus1 | ue(v) |
| } else { | |
| nnpfc_extended_patch_width_cd_delta_minus1 | ue(v) |
| nnpfc_extended_patch_height_cd_delta_minus1 | ue(v) |
| } | |
| nnpfc_padding_type | ue(v) |
| if( nnpfc_padding_type = = 4) { | |
| if( nnpfc_inp_order_idc != 1) | |
| nnpfc_luma_padding val | ue(v) |
| if( nnpfc_inp_order_idc != 0) { | |
| nnpfc_cb_padding_val | ue(v) |
| nnpfc_cr_padding_val | ue(v) |
| } | |
| } | |
| nnpfc_complexity_info_present_flag | u(1) |
| if( nnpfc_complexity_info_present_flag ) { | |
| nnpfc_parameter_type_idc | u(2) |
| if( nnpfc_parameter_type_idc != 2) | |
| nnpfc_log2_parameter_bit_length_minus3 | u(2) |
| nnpfc_num_parameters_idc | u(6) |
| nnpfc_num_kmac_operations_idc | ue(v) |
| nnpfc_total_kilobyte_size | ue(v) |
| } | |
| **nnpfc_energy_info_present_flag** | **u(1)** |
| **if( nnpfc_energy_info_present_flag ) {** | |
| **nnpfc_required_energy_ratio** | **u(8)** |
| **nnpfc_energy_ratio_sign_flag** | **u(1)** |
| **nnpfc_energy_ratio** | **u(8)** |
| **}** | |
| nnpfc_num_metadata_extension_bits | ue(v) |
| if( nnpfc_num_metadata_extension_bits > 0) { | |
| if( nnpfc_purpose = = 0) { | |
| nnpfc_application_purpose tag_uri_present_flag | u(1) |
| if( nnpfc_application_purpose_tag_uri_present_flag ) | |
| nnpfc_application_purpose tag_uri | st(v) |
| } | |
| if( SpatialExtrapolationFlag ) | |
| nnpfc_scan_type_idc | u(2) |
| nnpfc_reserved_metadata_extension | u(v) |

(continued)

| | |
|---|---|
| } | |
| } | |
| /* ISO/IEC 15938-17 bitstream */ | |
| if( nnpfc_mode_idc = = 0) { | |
| while( !byte_aligned( ) ) | |
| nnpfc_alignment_zero_bit_b | u(1) |
| for( i = 0; more_data_in_payload( ); i++ ) | |
| nnpfc_payload_byte[ i ] | b(8) |
| } | |
| } | |

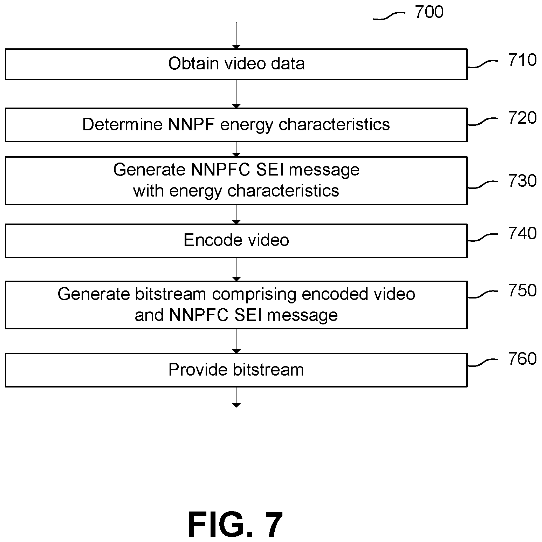

FIG. 7 illustrates an example process for encoding a bitstream comprising information indicative of energy characteristics of the neural network post-processing filter according to embodiments. The process 700 is for example implemented by a processor 1010 of a device 1000 of figure 1, a system 210 of figure 2, or an encoder 300 of figure 3. In step 710, the processor obtains video data. In step 720, the processor determines energy characteristics of the neural network post-processing filter. An example of energy consumption of a neural network could be described by the following equation:

$$EN = (\alpha \times M + \beta) \times S + \Delta$$

Where $E_N$ is the energy consumption in Joule, M is the number of kMAC operations, S is the number of pixels in a frame of the input content and $\alpha$, $\beta$ and $\Delta$ are constants depending on the neural network. Other equations may be used.
In step 730, the processor generates a NNPFC SEI message comprising information indicative of energy characteristics of the neural network post-processing filter, for example based on the syntax of Tables 4a-4c, 6a-6c or 7a-7c.
In step 740, the processor conventionally encodes the video. In step 750, the processor generates a bitstream that comprises the encoded video data and the NNPFC SEI message comprising information indicative of energy characteristics of the neural network post-processing filter. In step 760, the processor provides the bitstream.
In at least one embodiment, the NNPF is predetermined (i.e., standardized). In at least one embodiment, the NNPF is defined by a URL. In at least one embodiment, the weights of the NNPF model are transmitted in the bitstream (for example using ISO/IEC 15938-17 syntax introduced in table 2). These methods are activated using the nnpfc_mode_id flag and setting the appropriate parameters.

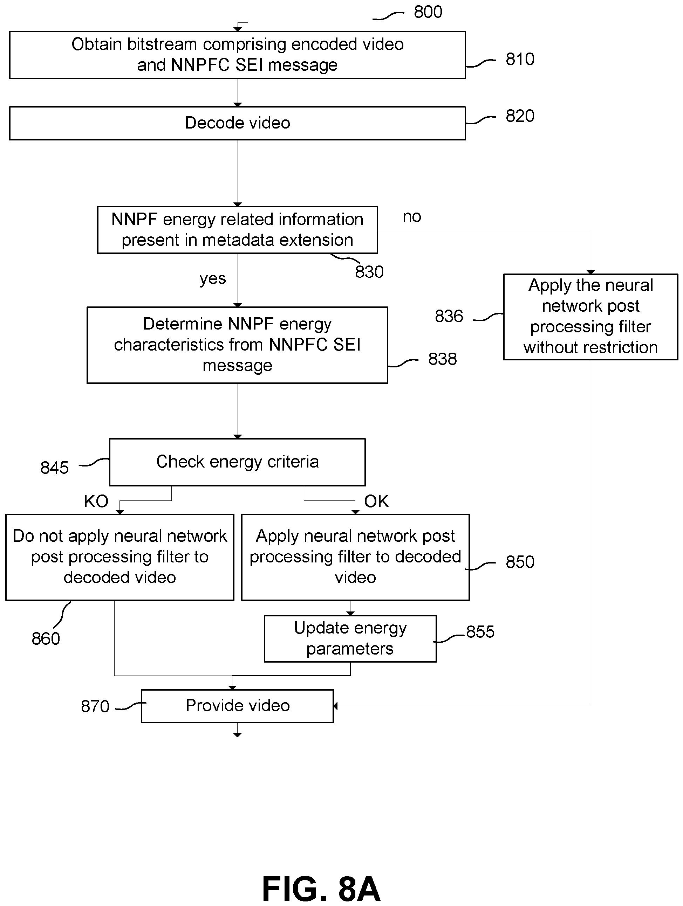

FIG. 8A illustrates an example process for decoding a bitstream comprising a NNPFC SEI message carrying information indicative of energy characteristics of the neural network post-processing filter according to embodiments. The process 800 is for example implemented by a device 1000 of figure 1, a system 230 of figure 2, or a decoder 400 of figure 4. In step 810, the processor obtains the bitstream that comprises an encoded video data and metadata for neural network post-processing filter packaged into a NNPFC SEI message carrying information indicative of energy characteristics of the neural network post-processing filter, for example based on the syntax of Tables 4a, or 6a. In step 820, the processor conventionally decodes the video from the encoded video data. In step 830, the processor checks if NNPF energy related information is present in the metadata extension section of the SEI message. When it is not the case, it indicates that no energy related information for the NNPF is present and therefore the processor cannot get such information from the NNPFC SEI message. In this case, in one embodiment, the processor jumps to step 836 and applies the NNPF without restriction. In another embodiment, no NNPF is applied in the case where the energy related information is not present. When NNPF energy related information is present in the metadata extension section of the SEI message, the processor jumps to step 838. In step 838, the processor determines, from the NNPFC SEI message, energy characteristics of the neural network post-processing filter or of the set of purposes (i.e. sub tasks) of the neural network post-processing filter. The figure describes the process for a single purpose. However, if more than one purpose is activated, the steps 845, 850, 855, 860 may be iterated on the plurality of energy related NNPFC flags, each related to one purpose. In step 845, the processor checks energy criteria and responsively decides whether the NNPF should be applied or not. Different criteria may be used. One example of criterion is related to remaining available battery. Indeed, in the case of mobile devices, when the battery charge level is too low, applying the NNPF may result in a mobile device that is no longer operational. Therefore, in this case where the battery charge level is too low, the processor skips the application of the NNPF in order to save some energy. As a result of the energy check of step 845, the processor jumps to step 850 or 860 accordingly. In step 860, the processor does not apply the neural network post-processing filter to the decoded video. In step 850, the processor applies the neural network post-processing filter to the decoded video and updates the energy parameters in step 855. This step comprises for example updating the amount of remaining battery according to the impact of a newly selected NNFPF. Finally, in step 870, the processor provides the video. In case several purposes are activated, steps 860 and 850 are adapted respectively to activate or deactivate the corresponding purpose of the NNPF, and step 870 is preceded by another step in which the NNPF with the updated purposes is applied or not depending on whether some purposes remain activated.

The test of step 830 for checking if NNPF energy related information is present in the metadata extension section of the SEI message can be done using size computations of the metatada extension. If the size indicated by the **nnpfc_num_metadata_extension_bits** syntax element is not zero and is greater than the size of the elements not related to energy information (as defined after the **nnpfc_num_metadata_extension_bits** definition in the if condition), then the processor can decide that energy related information is present in the metadata extension section. Another test would be based on the **numSpecifiedMetadataExtensionBits** that may be used to indicate the number of bits already used by the section not related to energy information (i.e., the if condition in the metadata extension related to the **nnpfc_purpose** and the **SpatialExtrapolationFlag** flags).

In another embodiment, the decision to apply the NNPF is also conditioned to the amount of energy needed to process to some other processings or to the amount of energy needed by some other tools at the decoder side.

In another embodiment, when the **nnpfc_required_energy_ratio** syntax element contains a percentage of increase of energy corresponding to the use of the NNPF, an additional step is introduced after decoding this metadata which enables to convert this percentage into an amount of energy that can be compared to the energy criteria such as the remaining state of the battery. For this, the current level of energy drawn from the battery is used to compute the correspondence between the percentage and the actual needed energy.

In another embodiment, when multiple purposes are activated" the decision to activate a NNPF purpose is not done sequentially, but, for each NNPF purpose that should be activated, all energy ratios are decoded and a selection is done between these NNPF purposes according to for example, some level of priority in the processing of some NNPF purposes compared to others, or in order to maximize the number of NNPF purposes that it will be possible to apply (for example, starting by those that require less energy), or according to a combination of the two above examples (priority and energy). The choice of NNPF purposes may also depend on other decision indicators.

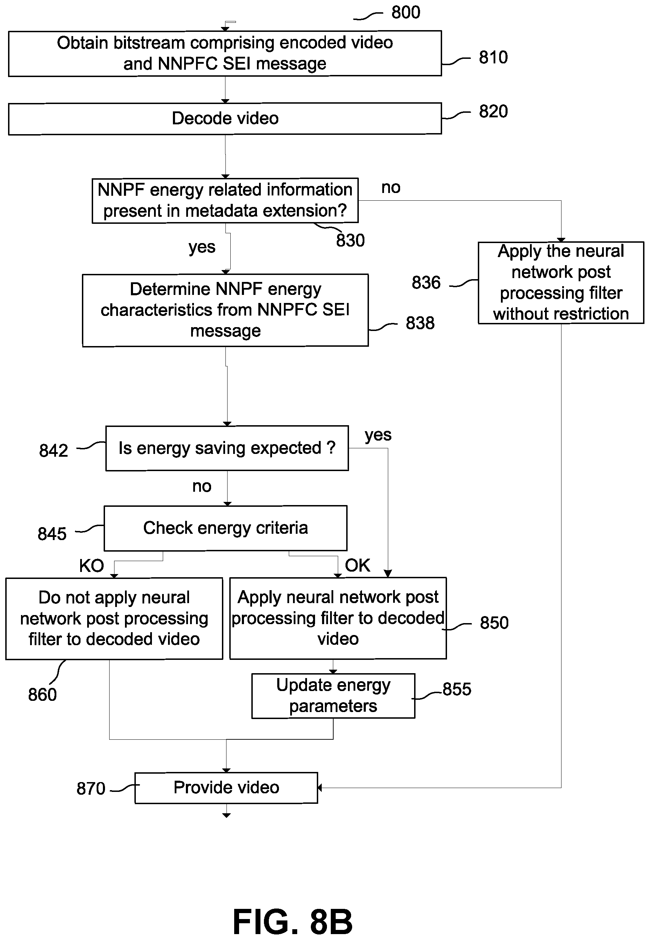

FIG. 8B illustrates a second example process for decoding a bitstream comprising a NNPFC SEI message carrying information indicative of energy characteristics of the neural network post-processing filter according to the second and third embodiments. FIG. 8B is very similar to figure 8A and mostly comprises the same steps, with the addition of a new step 842. This process is related to the syntax defined in Table 7a where a **nnpfc_ energy_ratio** syntax element is used to specify the potential gain or loss in terms of energy while using the content on which the NNPF would have been applied. The steps are identical to the corresponding steps as described with respect to figure 8A, with the exception of steps 838 and 842. Indeed, in this case, the syntax element extracted from the NNPFC SEI message is a **nnpfc_energy_ratio** syntax element that represents the amount of energy that may be gained or lost as a consequence of the use of the NNPF or a balance of energy that would be obtained if the NNPF were applied, and not only an energy cost of applying the NNPF as indicated by the **nnpfc_required_energy_ratio** of figure 8A. In the additional step 842, it is tested whether the application of the NNPF brings some energy savings. This may be done by testing the **nnpfc energy_ratio sign flag** syntax element when it exists. In this case, a negative sign indicates that an energy saving is expected as result of the application of the filter. In some variants, energy savings are indicated by specific values of the **nnpfc_energy_ratio** syntax element. In case the application of the NNPF brings some energy savings, the processor jumps to step 850 and applies the NNPF, which will result in an absolute gain in energy. A positive sign indicates that no energy saving is expected as result of the application of the filter. In this case, the processor jumps to step 845 and, similar to the figure 8A, checks the energy criteria to decide if the NNPF should be applied. Similarly to Figure 8A, when several purposes are activated, steps 860 and 850 are adapted respectively to activate or deactivate the corresponding purpose of the NNPF, and step 870 is preceded by another step in which the NNPF with the updated purposes is applied or not depending on whether some purposes remain activated.

In the embodiments and example processes described above, the energy criteria used to determine whether or not to apply the NNPF is described as related to the battery charge level. However, other criteria may be used for this purpose and particularly in the case of devices plugged into the electricity supply network (e.g. a television) that do not consider charge level. However, such devices may also integrate the same mechanisms aiming at controlling their energy consumption. The energy criteria may be based for example on some user profile containing an energy threshold above which the user does not want to go. In this case, one use case could be a user watching a content on a TV screen, and this user having a user profile with a defined maximum energy threshold. If the application of the NNPF results in some energy consumption higher than the threshold, then the filter is not applied. The energy criteria may be based for example on a user setting or device configuration parameter that indicates a level of environmental friendliness. A high level of such parameter would result in no NNPF applied, except when it results on an overall energy saving, as discussed with reference to figure 8B.

In addition, the criteria may be a combination of multiple criteria. For example, a user setting may define a minimal charge level under which the NNPF is not applied.

In at least one embodiment combining the embodiments above, the NNPFC SEI message comprises a first information indicative of energy needed to apply the neural network post-processing filter and a second information indicative of the energy savings (or cost) as a consequence of the application of the neural network post-processing filter. The first information may be based on the **nnpfc_required_energy_ratio** syntax element as defined in the different embodiments described and the second information may be based on the **nnpfc _energy_ratio** syntax element as defined in the second embodiment described above. This would allow the device to make a choice based on more information.

Embodiments introduced above describe an energy parameter related to a neural network post-processing filter taking the form of a **nnpfc_required_energy_ratio** syntax element or a **nnpfc_energy_ratio** syntax element. The labeling of such energy parameters may be different while still corresponding to the principles of the embodiments described herein.

In the embodiments described above, the ratio corresponds either to an increase/decrease in terms of energy of the dedicated tool in charge of running the NNPF (e.g., the decoder) or it can be the energy increase/decrease of a bigger system containing the tool that runs the NNPF (e.g. a set top box).

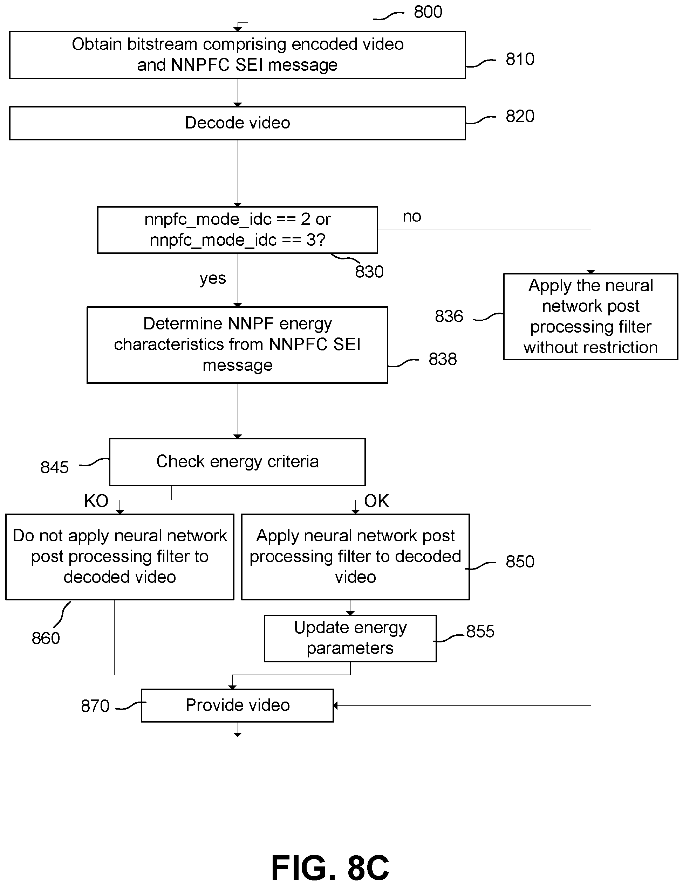

FIG. 8C illustrates an example process for decoding a bitstream comprising a NNPFC SEI message carrying information indicative of energy characteristics of the neural network post-processing filter according to embodiments. The process 800 is for example implemented by a device 1000 of figure 1, a system 230 of figure 2, or a decoder 400 of figure 4. In step 810, the processor obtains the bitstream that comprises an encoded video data and metadata for neural network post-processing filter packaged into a NNPFC SEI message carrying information indicative of energy characteristics of the neural network post-processing filter, for example based on the syntax of Tables 4b, or 6b. In step 820, the processor conventionally decodes the video from the encoded video data. In step 830, the value of the **nnpfc_mode_idc** syntax element is checked. When the **nnpfc_mode_idc** is not set to 2 or 3, it indicates that no energy related information for the NNPF is present and therefore the processor cannot get such information from the NNPFC SEI message. In this case, in one embodiment, the processor jumps to step 836 and applies the NNPF without restriction. In another embodiment, no NNPF is applied in the case where the energy related information is not present. When the **nnpfc_mode_idc** is set to 2 or 3, it indicates that energy related information for the NNPF is present. In this case, the processor jumps to step 838. In step 838, the processor determines, from the NNPFC SEI message, energy characteristics of the neural network post-processing filter or of the set of purposes (i.e., sub tasks) of the neural network post-processing filter. More particularly, for each of the NNPFC Flags set to 1, thus corresponding to NNPF subtask to activate, the corresponding **nnpfc_required_energy_ratio** metadata are decoded. The figure describes the process for a single purpose. However, if more than one purpose is activated, the steps 845, 850, 855, 860 may be iterated on the plurality of energy related NNPFC flags, each related to one purpose. In step 845, the processor checks energy criteria and responsively decides whether the NNPF should be applied or not. Different criteria may be used. One example of criterion is related to remaining available battery. Indeed, in the case of mobile devices, when the battery charge level is too low, applying the NNPF may result in a mobile device that is no longer operational. Therefore, in this case where the battery charge level is too low, the processor skips the application of the NNPF in order to save some energy. As a result of the energy check of step 845, the processor jumps to step 850 or 860 accordingly. In step 860, the processor does not apply the neural network post-processing filter to the decoded video. In step 850, the processor applies the neural network post-processing filter to the decoded video and updates the energy parameters in step 855. This step comprises for example updating the amount of remaining battery according to the impact of a newly selected NNPF. Finally, in step 870, the processor provides the video. In case several purposes are activated, steps 860 and 850 are adapted respectively to activate or deactivate the corresponding purpose of the NNPF, and step 870 is preceded by another step in which the NNPF with the updated purposes is applied or not depending on whether some purposes remain activated.

In another embodiment, the decision to apply the NNPF is also conditioned to the amount of energy needed to process to some other processings or to the amount of energy needed by some other tools at the decoder side.

In another embodiment, when the **nnpfc_required_energy_ratio** syntax element contains a percentage of increase of energy corresponding to the use of the NNPF, an additional step is introduced after decoding this metadata which enables to convert this percentage into an amount of energy that can be compared to the energy criteria such as the remaining state of the battery. For this, the current level of energy drawn from the battery is used to compute the correspondence between the percentage and the actual needed energy.

In another embodiment, when multiple purposes are activated" the decision to activate a NNPF purpose is not done sequentially, but, for each NNPF purpose that should be activated, all energy ratios are decoded and a selection is done between these NNPF purposes according to for example, some level of priority in the processing of some NNPF purposes compared to others, or in order to maximize the number of NNPF purposes that it will be possible to apply (for example, starting by those that require less energy), or according to a combination of the two above examples (priority and energy). The choice of NNPF purposes may also depend on other decision indicators.

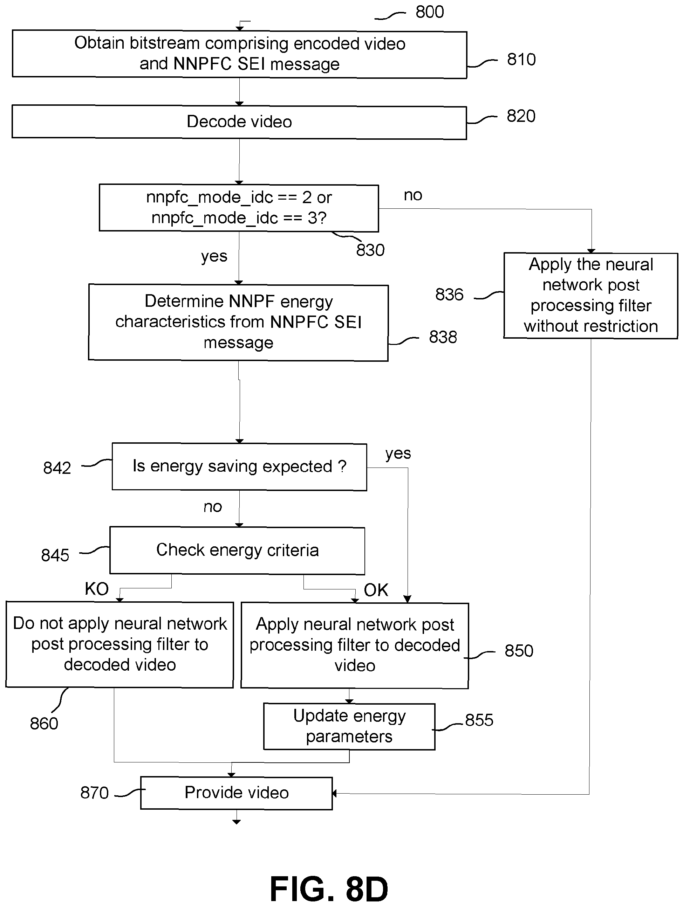

FIG. 8D illustrates a second example process for decoding a bitstream comprising a NNPFC SEI message carrying information indicative of energy characteristics of the neural network post-processing filter according to the second and third embodiments. Figure 8D is very similar to figure 8C and mostly comprises the same steps, with the addition of a new step 842. This process is related to the syntax defined in Table 7b where a **nnpfc_ energy_ratio** syntax element is used to specify the potential gain or loss in terms of energy while using the content on which the NNPF would have been applied. The steps are identical to the corresponding steps as described with respect to figure 8C, with the exception of step 830. Indeed, in this case, the syntax element extracted from the NNPFC SEI message is a **nnpfc_energy_ratio** syntax element that represents the amount of energy that may be gained or lost as a consequence of the use of the NNPF or a balance of energy that would be obtained if the NNPF were applied, and not only an energy cost of applying the NNPF as indicated by the **nnpfc_required_energy_ratio** of figure 8C. In the additional step 842, it is tested whether the application of the NNPF brings some energy savings. This may be done by testing the **nnpfc energy_ratio sign flag** syntax element when it exists. In this case, a negative sign indicates that an energy saving is expected as result of the application of the filter. In some variants, energy savings are indicated by specific values of the **nnpfc_energy_ratio** syntax element. In case the application of the NNPF brings some energy savings, the processor jumps to step 850 and applies the NNPF, which will result in an absolute gain in energy. A positive sign indicates that no energy saving is expected as result of the application of the filter. In this case, the processor jumps to step 845 and, similar to the figure 8C, checks the energy criteria to decide if the NNPF should be applied. Similarly to Figure 8C, when several purposes are activated, steps 860 and 850 are adapted respectively to activate or deactivate the corresponding purpose of the NNPF, and step 870 is preceded by another step in which the NNPF with the updated purposes is applied or not depending on whether some purposes remain activated.

In at least one embodiment, the NNPF is predetermined (i.e., standardized). In at least one embodiment, the NNPF is defined by a URL. In at least one embodiment, the weights of the NNPF model are transmitted in the bitstream (for example using ISO/IEC 15938-17 syntax introduced in table 2). These methods are activated using the nnpfc_mode_id flag and setting the appropriate parameters.

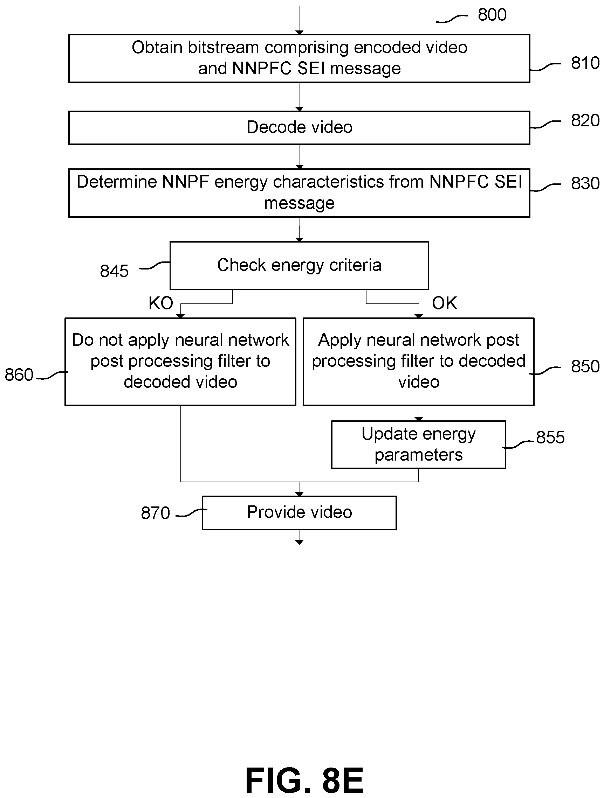

FIG. 8E illustrates an example process for decoding a bitstream comprising a NNPFC SEI message carrying information indicative of energy characteristics of the neural network post-processing filter according to embodiments. The process 800 is for example implemented by a device 1000 of figure 1, a system 230 of figure 2, or a decoder 400 of figure 4. In step 810, the processor obtains the bitstream that comprises an encoded video data and metadata for neural network post-processing filter packaged into a NNPFC SEI message carrying information indicative of energy characteristics of the neural network post-processing filter, for example based on the syntax of Tables 4c, or 6c. In step 820, the processor conventionally decodes the video from the encoded video data. In step 830, the processor determines, from the NNPFC SEI message, energy characteristics of the neural network post-processing filter or of the set of purposes (i.e., sub tasks) of the neural network post-processing filter. More particularly, for each of the NNPFC Flags set to 1, thus corresponding to NNPF subtask to activate, the corresponding **nnpfc_required_energy_ratio** metadata are decoded. The figure describes the process for a single purpose. However, if more than one purpose is activated, the steps 845, 850, 855, 860 may be iterated on the plurality of energy related NNPFC flags each related to one purpose. In step 845, the processor checks energy criteria and responsively decides whether the NNPF should be applied or not. Different criteria may be used. One example of criterion is related to remaining available battery. Indeed, in the case of mobile devices, when the battery charge level is too low, applying the NNPF may result in a mobile device that is no longer operational. Therefore, in this case where the battery charge level is too low, the processor skips the application of the NNPF in order to save some energy. As a result of the energy check of step 845, the processor jumps to step 850 or 860 accordingly. In step 860, the processor does not apply the neural network post-processing filter to the decoded video. In step 850, the processor applies the neural network post-processing filter to the decoded video and updates the energy parameters in step 855. This step comprises for example updating the amount of remaining battery according to the impact of a newly selected NNPF. Finally, in step 870, the processor provides the video. In case several purposes are activated, steps 860 and 850 are adapted respectively to activate or deactivate the corresponding purpose of the NNPF, and step 870 is preceded by another step in which the NNPF with the updated purposes is applied or not depending on whether some purposes remain activated.

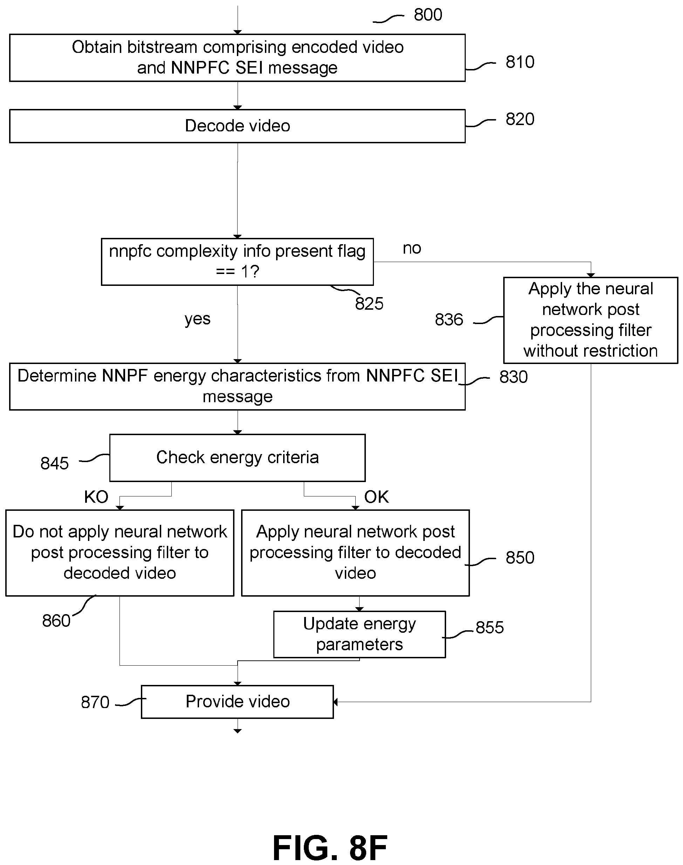

FIG. 8F illustrates a second example process for decoding a bitstream comprising a NNPFC SEI message carrying information indicative of energy characteristics of the neural network post-processing filter according to embodiments. Figure 8F is very similar to figure 8E and mostly comprises the same steps. An additional step 825 is introduced, in which the processor checks if the **nnpfc_complexity_info_present_flag** is set to 1. This indicates that complexity information related to the NNPF is present. In this case, the process is identical to the process of figure 8E. When the **nnpfc_complexity_info_present_flag** is set to 0, it indicates that no complexity information related to the NNPF is present and therefore the processor cannot get NNPF energy related information from the NNPFC SEI message. In this case, in one embodiment, the processor jumps to step 836 and applies all the NNPF without restriction. In another embodiment, no NNPF is applied in the case where the complexity information is not present. Similarly to Figure 8E, when several purposes are activated, steps 860 and 850 are adapted respectively to activate or deactivate the corresponding purpose of the NNPF, and step 870 is preceded by another step in which the NNPF with the updated purposes is applied or not depending on whether some purposes remain activated.

In another embodiment, the decision to apply the NNPF is also conditioned to the amount of energy needed to process to some other processings or to the amount of energy needed by some other tools at the decoder side.

In another embodiment, when the **nnpfc_required_energy_ratio** syntax element contains a percentage of increase of energy corresponding to the use of the NNPF, an additional step is introduced after decoding this metadata which enables to convert this percentage into an amount of energy that can be compared to the energy criteria such as the remaining state of the battery. For this, the current level of energy drawn from the battery is used to compute the correspondence between the percentage and the actual needed energy.

In another embodiment, when multiple purposes are activated, the decision to activate a NNPF purpose is not done sequentially, but, for each NNPF purpose that should be activated, all energy ratios are decoded and a selection is done between these NNPF purposes according to for example, some level of priority in the processing of some NNPF purposes compared to others, or in order to maximize the number of NNPF purposes that it will be possible to apply (for example, starting by those that require less energy), or according to a combination of the two above examples (priority and energy). The choice of NNPF purposes may also depend on other decision indicators.

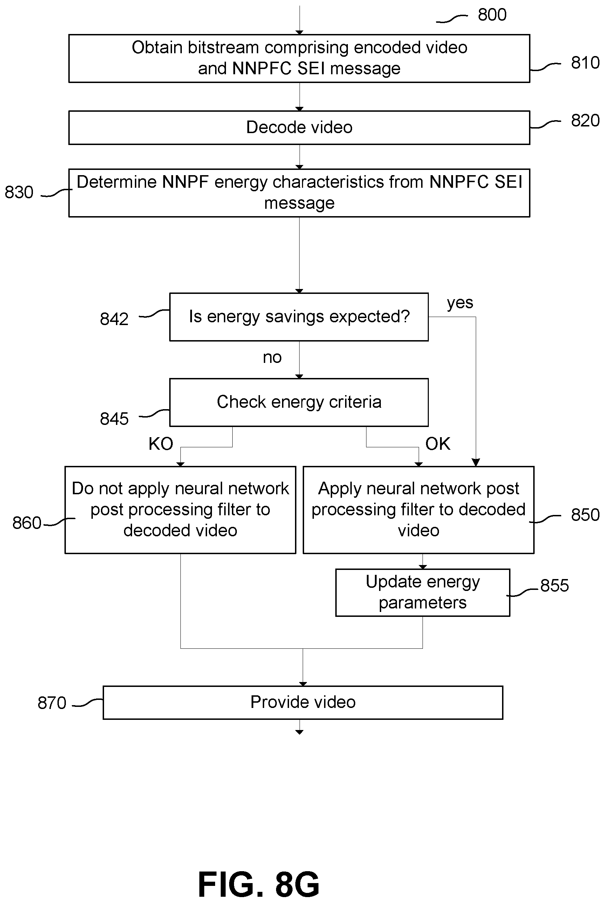

FIG. 8G illustrates a third example process for decoding a bitstream comprising a NNPFC SEI message carrying information indicative of energy characteristics of the neural network post-processing filter according to the second and third embodiments. Figure 8G is very similar to figure 8E and mostly comprises the same steps, with the addition of a new step 842. This process is related to the syntax defined in Table 7c where a **nnpfc_energy_ratio** syntax element is used to specify the potential gain or loss in terms of energy while using the content on which the NNPF would have been applied. The steps are identical to the corresponding steps as described with respect to figure 8E, with the exception of step 830. Indeed, in this case, the syntax element extracted from the NNPFC SEI message is a **nnpfc_energy_ratio** syntax element that represents the amount of energy that may be gained or lost as a consequence of the use of the NNPF or a balance of energy that would be obtained if the NNPF were applied, and not only an energy cost of applying the NNPF as indicated by the **nnpfc_required_energy_ratio** of figures 8E, 8F. In the additional step 842, it is tested whether the application of the NNPF brings some energy savings. This may be done by testing the **nnpfc energy_ratio sign flag** syntax element when it exists. In this case, a negative sign indicates that an energy saving is expected as result of the application of the filter. In some variants, energy savings are indicated by specific values of the **nnpfc_energy_ratio** syntax element. In case the application of the NNPF brings some energy savings, the processor jumps to step 850 and applies the NNPF, which will result in an absolute gain in energy. A positive sign indicates that no energy saving is expected as result of the application of the filter. In this case, the processor jumps to step 845 and, similar to the figure 8A, checks the energy criteria to decide if the NNPF should be applied. Similarly to Figures 8E and 8F, when several purposes are activated, steps 860 and 850 are adapted respectively to activate or deactivate the corresponding purpose of the NNPF, and step 870 is preceded by another step in which the NNPF with the updated purposes is applied or not depending on whether some purposes remain activated.

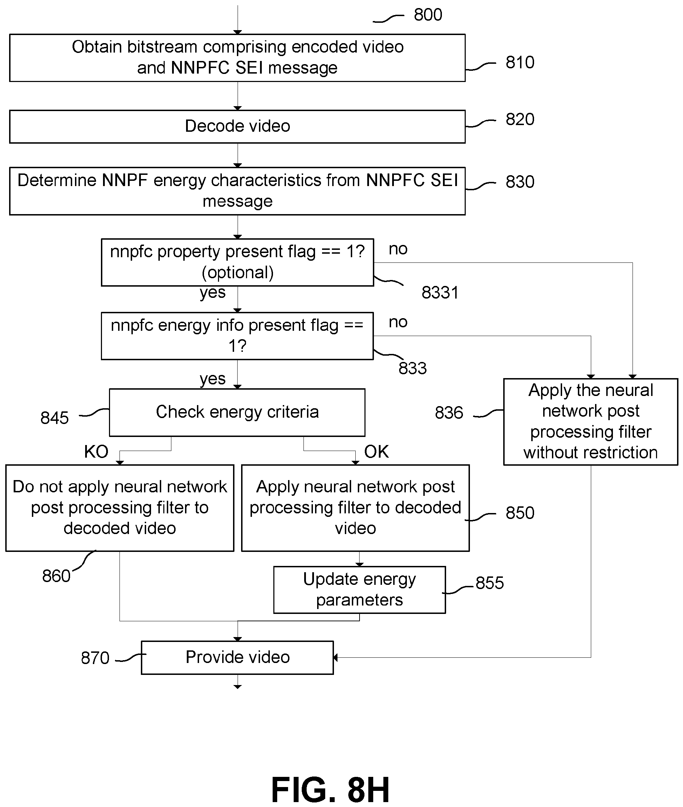

FIG. 8H illustrates an example of using the nnpfc energy_info_present flag described herein. The operations performed according to FIG. 8H may be similar to those shown in FIG. 8F, and may include an additional (e.g., optional) operation 8331 related to checking whether the nnpfc_property_flag may be present and/or its value. Corresponding actions may then be taken based on the presence/value of the nnpfc_property_flag. An additional operation 833 related to checking whether the nnpfc energy_info_present flag may be present and/or its value may be included. Corresponding actions may then be taken based on the presence/value of the nnpfc energy_info_presenty_flag. In a variant, the operation 8331 may be replaced by checking whether the nnpfc_complexity_info_present_flag may be present and/or its value, similarly to step 825 in Figure 8F.

Similar checks may also be added to the other example processes described herein, such as, for example, the process illustrated in one or more of FIGs. 8A-8F.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

i. Encoding, into coded video data, syntax elements that can enable the decoder to decode the coded video data, according to any of the embodiments described herein.

ii. Video data (e.g., a bitstream) that may include one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A video encoding device comprising a processor configured to:

   obtain video data;
   generate a supplemental enhancement information (SEI) message, wherein the SEI message comprises a first syntax element that indicates whether energy information related to a neural network post-processing filter (NNPF) is present in the SEI message;
   encode video data;
   generate a bitstream comprising the encoded video data and the SEI message; and
   provide the bitstream.

2. The video encoding device of claim 1, wherein the SEI message further comprises a second syntax element that indicates whether information related to a complexity or a property of the NNPF is present in the SEI message.

3. The video encoding device of claim 1 or 2, wherein the first syntax element includes a flag and wherein the energy information related to the NNPF indicates at least one of an energy consumption of the NNPF, a net energy gain associated with application of the NNPF, or a net energy loss associated with application of the NNPF.

4. The video encoding device of any of claims 1-3, wherein the SEI message further comprises an indication that the first syntax element is applicable to one or more modes of the NNPF.

5. The video encoding device of any of claims 1-3, wherein the first syntax element is provided as part of SEI extension metadata.

6. A video decoding device comprising a processor configured to:

obtain a bitstream comprising video data and a supplemental enhancement information (SEI) message, wherein the SEI message comprises a first syntax element that indicates whether energy information related to a neural network post-processing filter (NNPF) is present in the SEI message;
decode the video data; and
determine whether to apply the NNPF to the decoded video data based at least on the SEI message.

7. The video decoding device of claim 6, wherein the SEI message further comprises a second syntax element that indicates whether information related to a complexity or a property of the NNPF is present in the SEI message.

8. The video decoding device of claim 6 or claim 7, wherein the first syntax element includes a flag and wherein the energy information related to the NNPF indicates at least one of an energy consumption of the NNPF, a net energy gain associated with application of the NNPF, or a net energy loss associated with application of the NNPF.

9. The video decoding device of any of claims 6-8, wherein the SEI message further comprises an indication that the first syntax element is applicable to one or more modes of the NNPF.

10. The video decoding device of any of claims 6-8, wherein the first syntax element is provided as part of SEI extension metadata.

11. A video decoding method, comprising:

obtaining a bitstream comprising video data and a supplemental enhancement information (SEI) message, wherein the SEI message comprises a first syntax element that indicates whether energy information related to a neural network post-processing filter (NNPF) is present in the SEI message;
decoding the video data; and
determining whether to apply the NNPF to the decoded video data based at least on the SEI message.

12. The video decoding method of claim 11, wherein the SEI message further comprises a second syntax element that indicates whether information related to a complexity or a property of the NNPF is present in the SEI message.

13. The video decoding method of claim 11 or claim 12, wherein the second syntax element includes a flag and wherein the energy information related to the NNPF indicates at least one of an energy consumption of the NNPF, a net energy gain associated with application of the NNPF, or a net energy loss associated with application of the NNPF.

14. The video decoding method of any of claims 11-13, wherein the SEI message further comprises an indication that the second syntax element is applicable to one or more modes of the NNPF.

15. The video decoding method of any of claims 11-13, wherein the second syntax element is provided as part of SEI extension metadata.

**FIG. 1**

EP 4 734 508 A1

**FIG. 2**

FIG. 3

400

| 410 | — 420 — | 430 | — 440 — | 450 |

**FIG. 4**

FIG. 5

**FIG. 6**

```
                                    ⌐ 700

        ┌─────────────────────────────────────┐
        │          Obtain video data          │─── 710
        └─────────────────────────────────────┘
                          │
        ┌─────────────────────────────────────┐
        │   Determine NNPF energy characteristics │─── 720
        └─────────────────────────────────────┘
        ┌─────────────────────────────────────┐
        │       Generate NNPFC SEI message    │
        │        with energy characteristics  │─── 730
        └─────────────────────────────────────┘
                          │
        ┌─────────────────────────────────────┐
        │             Encode video            │─── 740
        └─────────────────────────────────────┘
                          │
        ┌─────────────────────────────────────┐
        │  Generate bitstream comprising encoded video │
        │          and NNPFC SEI message      │─── 750
        └─────────────────────────────────────┘
                          │
        ┌─────────────────────────────────────┐
        │           Provide bitstream         │─── 760
        └─────────────────────────────────────┘
                          │
                          ▼
```

# FIG. 7

800

| Obtain bitstream comprising encoded video and NNPFC SEI message | 810 |

Decode video — 820

NNPF energy related information present in metadata extension — 830
no → Apply the neural network post processing filter without restriction — 836

yes

Determine NNPF energy characteristics from NNPFC SEI message — 838

Check energy criteria — 845

KO → Do not apply neural network post processing filter to decoded video — 860

OK → Apply neural network post processing filter to decoded video — 850

Update energy parameters — 855

Provide video — 870

# FIG. 8A

FIG. 8B

800

Obtain bitstream comprising encoded video
and NNPFC SEI message — 810

Decode video — 820

nnpfc_mode_idc == 2 or
nnpfc_mode_idc == 3? — 830

no →

yes ↓

Determine NNPF energy
characteristics from NNPFC SEI
message — 836 / 838

Apply the neural
network post
processing filter
without restriction

845 — Check energy criteria

KO          OK

Do not apply neural network
post processing filter to
decoded video — 860

Apply neural network post
processing filter to decoded
video — 850

Update energy
parameters — 855

870 — Provide video

# FIG. 8C

_— 800

Obtain bitstream comprising encoded video
and NNPFC SEI message — 810

Decode video — 820

nnpfc_mode_idc == 2 or
nnpfc_mode_idc == 3?                    no
830

yes                                           Apply the neural
                                              network post
                              836 — processing filter
Determine NNPF energy                         without restriction
characteristics from NNPFC SEI
message — 838

842 — Is energy saving expected ?    yes

no

845 — Check energy criteria

KO                          OK

Do not apply neural network      Apply neural network post
post processing filter to        processing filter to decoded — 850
decoded video                    video

860                              Update energy — 855
                                 parameters

870 — Provide video

# FIG. 8D

— 800

Obtain bitstream comprising encoded video and NNPFC SEI message — 810

Decode video — 820

Determine NNPF energy characteristics from NNPFC SEI message — 830

845 — Check energy criteria

KO / OK

860 — Do not apply neural network post processing filter to decoded video

Apply neural network post processing filter to decoded video — 850

Update energy parameters — 855

870 — Provide video

# FIG. 8E

_~ 800

| Obtain bitstream comprising encoded video and NNPFC SEI message | ~ 810 |

| Decode video | ~ 820 |

nnpfc complexity info present flag == 1?    no

825

yes

| Apply the neural network post processing filter without restriction | 836 |

| Determine NNPF energy characteristics from NNPFC SEI message | ~ 830 |

845 ~ | Check energy criteria |

KO                    OK

| Do not apply neural network post processing filter to decoded video | | Apply neural network post processing filter to decoded video | ~ 850 |

860

| Update energy parameters | ~855 |

870 ~ | Provide video |

# FIG. 8F

800

Obtain bitstream comprising encoded video
and NNPFC SEI message — 810

Decode video — 820

830 — Determine NNPF energy characteristics from NNPFC SEI
message

842 — Is energy savings expected? | yes

no

845 — Check energy criteria

KO | OK

860 — Do not apply neural network
post processing filter to
decoded video

Apply neural network post
processing filter to decoded
video — 850

Update energy
parameters — 855

870 — Provide video

# FIG. 8G

800

Obtain bitstream comprising encoded video
and NNPFC SEI message — 810

Decode video — 820

Determine NNPF energy characteristics from NNPFC SEI
message — 830

nnpfc property present flag == 1?
(optional)                    no
                    8331
yes

nnpfc energy info present flag ==
1?                              no
                    833
yes

Check energy criteria
845 —

Apply the neural
network post
processing filter
without restriction
836 —

KO                OK

Do not apply neural network
post processing filter to
decoded video

Apply neural network post
processing filter to decoded
video — 850

860

Update energy
parameters — 855

870 — Provide video

**FIG. 8H**

| | Europäisches Patentamt<br>European Patent Office<br>Office européen des brevets | **EUROPEAN SEARCH REPORT** | **Application Number**<br>EP 24 30 6780 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | C-H DEMARTY (INTERDIGITAL) ET AL: "[AHG9]: Neural network post-filter for recovering images from energy-aware images", 34. JVET MEETING; 20240417 - 20240424; RENNES; (THE JOINT VIDEO EXPLORATION TEAM OF ISO/IEC JTC1/SC29/WG11 AND ITU-T SG.16 ), , no. JVET-AH0126 ; m67196 17 April 2024 (2024-04-17), XP030317431, Retrieved from the Internet: URL:https://jvet-experts.org/doc_end_user/documents/34_Rennes/wg11/JVET-AH0126-v2.zip JVET-AH0126.docx [retrieved on 2024-04-17] * abstract * * paragraphs [0001] - [0003] * ----- | 1-15 | INV.<br>H04N19/117<br>H04N19/85<br>H04N19/70 |
| X | C-H DEMARTY (INTERDIGITAL) ET AL: "[AHG9]: Neural network post-filter for tone mapping operations", 35. JVET MEETING; 20240712 - 20240719; SAPPORO; (THE JOINT VIDEO EXPLORATION TEAM OF ISO/IEC JTC1/SC29/WG11 AND ITU-T SG.16 ), , no. JVET-AI0062 5 July 2024 (2024-07-05), XP030320170, Retrieved from the Internet: URL:https://jvet-experts.org/doc_end_user/documents/35_Sapporo/wg11/JVET-AI0062-v2.zip JVET-AI0062.docx [retrieved on 2024-07-05] * abstract * * paragraphs [0001] - [0003] * ----- -/-- | 1,6,11 | **TECHNICAL FIELDS SEARCHED (IPC)**<br><br>H04N |

The present search report has been drawn up for all claims

| Place of search | Date of completion of the search | Examiner |
|---|---|---|
| Munich | 28 January 2025 | Cakiroglu Garton, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..........................................................................................
& : member of the same patent family, corresponding document

EPO FORM 1503 03.82 (P04C01)

**page 1 of 2**

| | Europäisches Patentamt<br>European Patent Office<br>Office européen des brevets | **EUROPEAN SEARCH REPORT** | **Application Number**<br>EP 24 30 6780 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/146589 A1 (DOUYIN VISION CO LTD [CN]; BYTEDANCE INC [US]) 11 July 2024 (2024-07-11) * paragraph [section3] * * paragraph [0108] * ----- | 1,6,11 | |
| A | CN 118 803 278 A (SHARP KK) 18 October 2024 (2024-10-18) * the whole document * ----- | 1-15 | |
| A | EP 4 447 451 A1 (SHARP KK [JP]) 16 October 2024 (2024-10-16) * the whole document * ----- | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 28 January 2025 | Cakiroglu Garton, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................................
& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 24 30 6780

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2025

| Patent document cited in search report | Publication date | Patent family member(s) | Publication date |
|---|---|---|---|
| WO 2024146589 A1 | 11-07-2024 | WO 2024146589 A1<br>WO 2024146595 A1 | 11-07-2024<br>11-07-2024 |
| CN 118803278 A | 18-10-2024 | CN 118803278 A<br>EP 4447451 A1<br>US 2024348831 A1 | 18-10-2024<br>16-10-2024<br>17-10-2024 |
| EP 4447451 A1 | 16-10-2024 | CN 118803278 A<br>EP 4447451 A1<br>US 2024348831 A1 | 18-10-2024<br>16-10-2024<br>17-10-2024 |

EPO FORM P0459

For more details about this annex : see Official Journal of the European Patent Office, No. 12/82